# EUROPEAN PATENT SPECIFICATION

(11) **EP 4 436 297 B1**
(45) Date of publication and mention of the grant of the patent: **14.10.2026**
(21) Application number: 21963798.0
(22) Date of filing: 26.11.2021
(51) Int. Cl.: H04W 74/0808, H04W 74/08, H04W 72/40, H04W 72/563, H04W 74/00, H04W 4/40, H04W 76/14, H04W 92/18, H04W 72/04, H04W 72/12

(54) **WIRELESS COMMUNICATION METHOD AND TERMINAL DEVICE**
DRAHTLOSKOMMUNIKATIONSVERFAHREN UND ENDGERÄTEVORRICHTUNG
PROCÉDÉ DE COMMUNICATION SANS FIL ET DISPOSITIF TERMINAL

(30) Priority: 15.11.2021 WO PCT/CN2021/130683
(43) Date of publication of application: 25.09.2024
(60) Divisional application: 26202578.6
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); WU, Zuomin, Dongguan, Guangdong 523860 (CN)
(74) Representative: RGTH
(86) International application number: PCT/CN2021/133670
(87) International publication number: WO 2023/082356

(56) References cited:
- WO-A1-2020/162804
- WO-A1-2020/162804
- WO-A1-2021/212354
- WO-A1-2021/212354
- US-A1- 2021 092 783
- US-A1- 2021 195 637

## Description

### TECHNICAL FIELD

Embodiments of this application relates to the field of communications, and more specifically, to a wireless communication method and a terminal device.

### BACKGROUND

When a sidelink transmission system works on an unlicensed spectrum, before performing sidelink transmission, a terminal device also needs to meet a transmission requirement of the unlicensed spectrum, for example, determines, in a listen before talk (Listen Before Talk, LBT) manner, whether the terminal device can access a channel, and the terminal device listens to whether the channel is idle. If the channel is idle, the sidelink transmission may be performed; otherwise, the sidelink transmission cannot be performed. When the terminal device determines, by using the type 1 (Type1) channel access mode, that the channel is idle, the terminal device may preempt the channel for sidelink transmission, and share a channel occupancy time (Channel Occupancy Time, COT) with another terminal, so as to assist the another terminal in performing channel access. However, when a terminal receives a plurality of pieces of COT sharing information, how to perform channel access by using the received COT information is a problem to be solved. D1 provides a method that may include: performing a channel access procedure based on a first channel access priority class (CAPC) value for initiating a channel occupancy time (COT) for transmitting data, wherein the first CAPC value is determined from a set of CAPC values based on a first priority level value of the data; and transmitting sidelink control information (SCI) within the COT, wherein the SCI indicates a subsequent time resource within the COT available for sidelink transmission.

### SUMMARY

Embodiments of this application provide a wireless communication method for a terminal device, a terminal device and a computer program product. The invention is set out in the appended set of claims.

### BRIEF DESCRIPTION OF DRAWINGS

FIG. 1 is a schematic diagram of a communications system architecture to which an embodiment of this application is applied.
FIG. 2 is a schematic diagram of another communications system architecture to which an embodiment of this application is applied.
FIG. 3 is a schematic diagram of sidelink communication within network coverage according to this application.
FIG. 4 is a schematic diagram of sidelink communication with partial network coverage according to this application.
FIG. 5 is a schematic diagram of sidelink communication out of network coverage according to this application.
FIG. 6 is a schematic diagram of sidelink communication in which a central control node exists according to this application.
FIG. 7 is a schematic diagram of unicast sidelink communication according to this application.
FIG. 8 is a schematic diagram of multicast sidelink communication according to this application.
FIG. 9 is a schematic diagram of broadcast sidelink communication according to this application.
FIG. 10 is a schematic diagram of a frame structure of a NR-V2X system according to this application.
FIG. 11 is a schematic flowchart of a wireless communication method according to an embodiment of this application.
FIG. 12 is a schematic diagram of a COT remaining duration corresponding to COT sharing information according to an embodiment of this application.
FIG. 13 is a schematic diagram of another COT remaining duration corresponding to COT sharing information according to an embodiment of this application.
FIG. 14 is a schematic diagram of still another COT remaining duration corresponding to COT sharing information according to an embodiment of this application.
FIG. 15 is a schematic block diagram of a terminal device according to an embodiment of this application.
FIG. 16 is a schematic block diagram of a communications device according to an embodiment of this application.
FIG. 17 is a schematic block diagram of an apparatus according to an embodiment of this application.
FIG. 18 is a schematic block diagram of a communications system according to an embodiment of this application.

### DESCRIPTION OF EMBODIMENTS

The following describes the technical solutions in embodiments of this application with reference to the accompanying drawings in the embodiments of this application. Apparently, the described embodiments are some rather than all of the embodiments of this application. For the embodiments of this application, all other embodiments obtained by a person of ordinary skill in the art without creative efforts fall within the protection scope of this application.

The technical solutions in embodiments of this application may be applied to various communications systems, for example, a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of a NR system, an LTE-based access to unlicensed spectrum (LTE-based access to unlicensed spectrum, LTE-U) system, a sidelink (Sidelink, SL) system, a NR-based access to unlicensed spectrum (NR-based access to unlicensed spectrum, NR-U) system, an SL-based access to unlicensed spectrum (SL-based access to unlicensed spectrum, SL-U) system, a non-terrestrial network (Non-Terrestrial Networks, NTN) system, a universal mobile telecommunication system (Universal Mobile Telecommunication System, UMTS), wireless local zone networks (Wireless Local Area Networks, WLAN), internet of things (internet of things, IoT), wireless fidelity (Wireless Fidelity, WiFi), a 5th generation (5th-Generation, 5G) system, or another communications system.

Generally, a quantity of connections supported by a conventional communication system is limited and is also easy to implement. However, with development of communication technologies, a mobile communications system not only supports conventional communication, but also supports, for example, device-to-device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to everything, V2X) communication. Embodiments of this application may also be applied to these communications systems.

Optionally, a communications system in this application may be applied to a carrier aggregation (Carrier Aggregation, CA) scenario, a dual connectivity (Dual Connectivity, DC) scenario, or a standalone (Standalone, SA) networking scenario.

Optionally, the communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile station, a mobile site, a remote station, a remote terminal, a mobile device, a user terminal, a terminal, a wireless communications device, a user agent, a user apparatus, or the like.

The terminal device may be a station (STATION, ST) in a WLAN, may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as a NR network, or a terminal device in a public land mobile network (Public Land Mobile Network, PLMN), or the like.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), a vehicle-mounted communications device, a wireless communication chip/application specific integrated circuit (application specific integrated circuit, ASIC)/system on chip (System on Chip, SoC), or the like.

As an example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that only focus on a specific type of application function and need to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB or eNodeB) in LTE, or a relay station or an access point, or a vehicle-mounted device, a wearable device, a network device or gNB (gNB) in a NR network, or a network device in a future evolved PLMN, or a network device in an NTN, or the like.

By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used in the cell. The cell may be a cell corresponding to a network device (for example, a base station). The cell may belong to a macro base station, or may be a base station corresponding to a small cell (Small cell). The small cell herein may include a metro cell (Metro cell), a micro cell (Micro cell), a pico cell (Pico cell), a femto cell (Femto cell), and the like. These small cells have characteristics such as small coverage and low transmit power, and are suitable for providing a high-rate data transmission service.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

The terms used in implementations of this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

It should be understood that, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefining" and "pre-configuration" can be implemented by pre-storing a corresponding code or table in a device (for example, including the terminal device and the network device) or in other manners that can be used for indicating related information, and a specific implementation thereof is not limited in this application. For example, pre-defining may refer to being defined in a protocol.

In embodiments of this application, the "protocol" may refer to a standard protocol in the communication field, which may include, for example, an LTE protocol, a NR protocol, and a related protocol applied to a future communications system, and this application is not limited in this regard.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of the embodiments of this application. The embodiments of this application include at least part of following content.

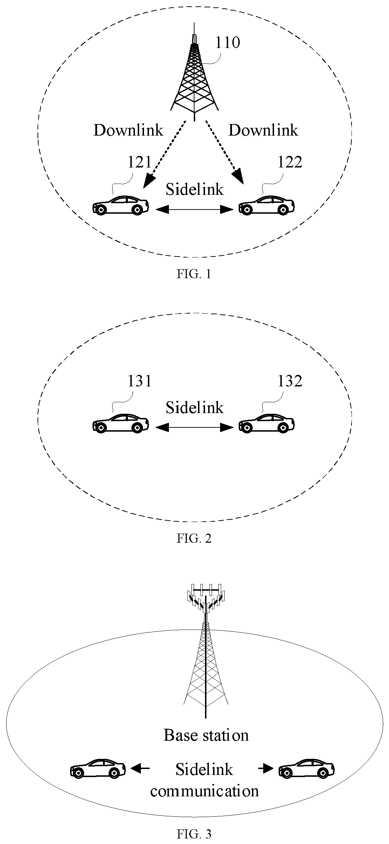

FIG. 1 is a schematic diagram of a communications system to which an embodiment of this application is applicable. Transmission resources of vehicle-mounted terminals (a vehicle-mounted terminal 121 and a vehicle-mounted terminal 122) are allocated by a base station 110, and the vehicle-mounted terminals transmit data on a sidelink based on the resources allocated by the base station 110. Specifically, the base station 110 may allocate, to a terminal, a resource for single transmission, or may allocate, to a terminal, a resource for semi-static transmission.

FIG. 2 is a schematic diagram of another communications system to which an embodiment of this application is applicable. Vehicle-mounted terminals (a vehicle-mounted terminal 131 and a vehicle-mounted terminal 132) independently select transmission resources from resources on a sidelink to perform data transmission. Optionally, the vehicle-mounted terminals may randomly select transmission resources, or select transmission resources in a listening manner.

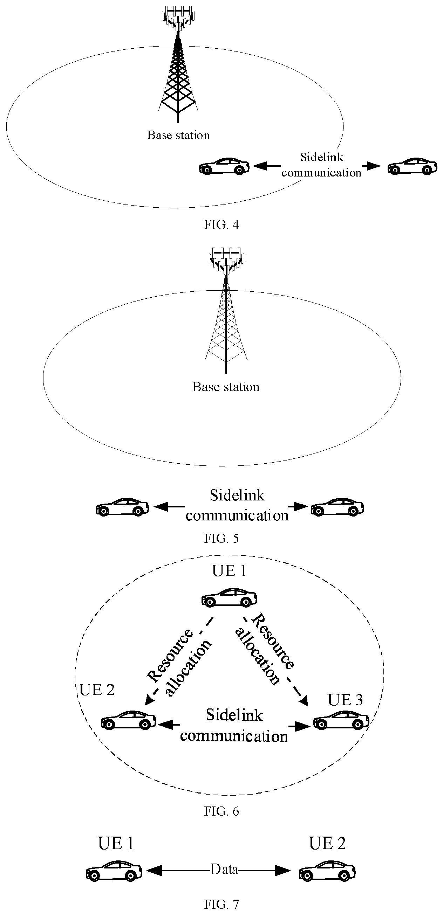

It should be noted that, sidelink communication is divided, depending on a network coverage status of a communicating terminal, into sidelink communication within network coverage, as shown in FIG. 3; sidelink communication with partial network coverage, as shown in FIG. 4; and sidelink communication out of network coverage, as shown in FIG. 5.

As shown in FIG. 3, in the sidelink communication within network coverage, all terminals that perform sidelink communication are within coverage of a base station. Thus, all terminals may perform sidelink communication based on a same sidelink configuration by receiving configuration signaling from a base station.

As shown in FIG. 4, in a case of the sidelink communication with partial network coverage, some terminals that perform sidelink communication are located within coverage of a base station, these terminals can receive configuration signaling from the base station, and perform sidelink communication based on a configuration of the base station. However, a terminal located out of the network coverage cannot receive configuration signaling from the base station. In this case, the terminal outside the network coverage determines, based on pre-configuration (pre-configuration) information and information carried in a physical sidelink broadcast channel (Physical Sidelink Broadcast Channel, PSBCH) transmitted by the terminals located within the network coverage, a sidelink configuration for sidelink communication.

As shown in FIG. 5, for the sidelink communication out of network coverage, all terminals that perform sidelink communication are located out of network coverage, and all terminals determine a sidelink configuration based on pre-configuration (pre-configuration) information for sidelink communication.

As shown in FIG. 6, for sidelink communication with a central control node, a plurality of terminals form a communication group, and the communication group has a central control node, which may also be referred to as a cluster header (Cluster Header, CH). The central control node has one of following functions: responsible for establishment of the communication group; joining and leaving of a group member; resource coordination, allocation of sidelink transmission resources for another terminal, and reception of sidelink feedback information from the another terminal; resource coordination with another communication group; and other functions.

It should be noted that device-to-device communication is a sidelink (Sidelink, SL) transmission technology based on device-to-device (Device to Device, D2D). Different from a traditional cellular system in which communication data is received or transmitted via a base station, in a V2X system, D2D direct communication is adopted, which therefore has higher spectral efficiency and lower transmission latency. Two transmission modes are defined in 3GPP, which are respectively denoted as mode 1 (sidelink resource allocation mode 1) and mode 2 (sidelink resource allocation mode 2).

Mode 1: Transmission resources of a terminal are allocated by a base station, and the terminal transmits data on a sidelink based on the resources allocated by the base station. The base station may allocate, to the terminal, a resource for single transmission, or may allocate, to the terminal, a resource for semi-static transmission. As shown in FIG. 3, a terminal is located within network coverage, and a network allocates, to the terminal, a transmission resource used for sidelink transmission.

Mode 2: A terminal selects a resource from a resource pool for data transmission. As shown in FIG. 5, a terminal is located out of coverage of a cell, and the terminal independently selects a transmission resource from a pre-configured resource pool for sidelink transmission. Alternatively, as shown in FIG. 3, a terminal independently selects a transmission resource from a resource pool configured by a network to perform sidelink transmission.

In new radio-vehicle to everything (New Radio-Vehicle to Everything, NR-V2X), autonomous driving is supported. Thus, higher requirements are imposed on data interaction between vehicles, such as higher throughput, lower latency, higher reliability, larger coverage, and more flexible resource allocation.

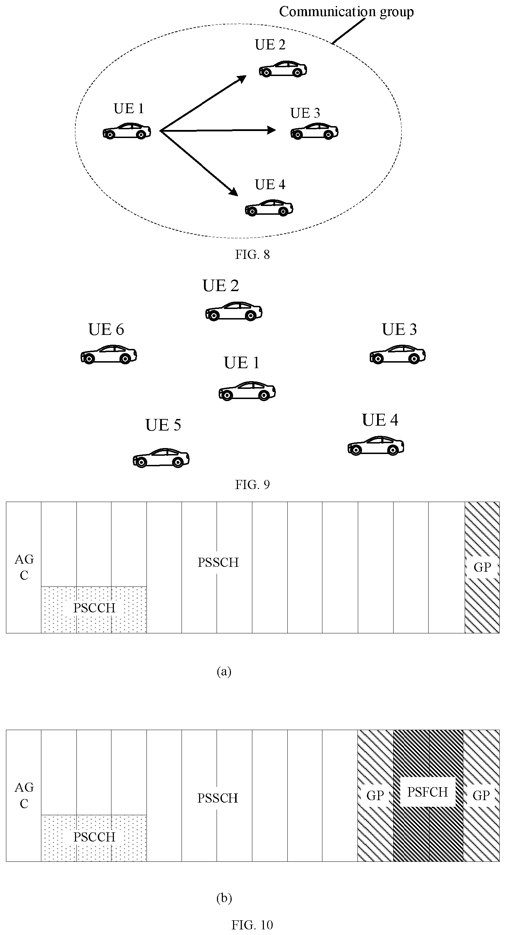

In LTE-V2X, broadcast transmission is supported. In NR-V2X, unicast and multicast transmissions are introduced. For the unicast transmission, there is only one receiving terminal. As shown in FIG. 7, unicast transmission is performed between a UE 1 and a UE 2. For the multicast transmission, all terminals in a communication group or all terminals in a specific transmission distance are receiving terminals. As shown in FIG. 8, a UE 1, a UE 2, a UE 3, and a UE 4 form a communication group, where the UE 1 transmits data, and other terminal devices in the group are all receiving terminals. For the broadcast transmission, any terminal around a transmitting terminal is a receiving terminal. As shown in FIG. 9, a UE 1 is a transmitting terminal, and other terminals around the UE 1, namely, a UE 2 to a UE 6, are all receiving terminals.

To better understand embodiments of this application, a frame structure of a NR-V2X system related to this application is described.

A slot structure in NR-V2X is shown in FIG. 10, where (a) in FIG. 10 shows a slot structure in which no physical sidelink feedback channel (Physical Sidelink Feedback Channel, PSFCH) is included; and (b) in FIG. 10 shows a slot structure including a PSFCH.

In NR-V2X, a physical sidelink control channel (Physical Sidelink Control Channel, PSCCH) starts from the second sidelink symbol of the slot in time domain and occupies two or three orthogonal frequency-division multiplexing (Orthogonal frequency-division multiplexing, OFDM) symbols, and may occupy {10, 12 15, 20, 25} physical resource blocks (physical resource block, PRB) in frequency domain. To reduce complexity of blind detection performed by a UE on the PSCCH, only one PSCCH symbol quantity and only one PRB quantity are allowed to be configured in one resource pool. In addition, because a sub-channel is a minimum granularity for allocation of a physical sidelink shared channel (Physical Sidelink Shared Channel, PSSCH) resource in NR-V2X, a quantity of PRBs occupied by a PSCCH must be less than or equal to a quantity of PRBs included in one sub-channel in a resource pool, to avoid additional limitation on selection or allocation of the PSSCH resource. APSSCH also starts from the second sidelink symbol of the slot in time domain. The last time domain symbol in the slot is a guard period (Guard Period, GP) symbol, and remaining symbols are mapped to the PSSCH. The first sidelink symbol in the slot is a repetition of the second sidelink symbol. Generally, a receiving terminal uses the first sidelink symbol as an auto gain control (Auto gain control, AGC) symbol, and data on the symbol is generally not used for data demodulation. The PSSCH occupies M sub-channels in frequency domain, and each sub-channel includes N consecutive PRBs, as shown in (a) in FIG. 10.

When a slot includes a PSFCH channel, the last-but-one symbol and the last-but-two symbol in the slot are used for transmission of the PSFCH channel, and data on the last-but-two symbol is a repetition of data on the last-but-one symbol, and a time domain symbol before the PSFCH channel is used as a GP symbol, as shown in (b) in FIG. 10.

To better understand embodiments of this application, an unlicensed spectrum related to this application is described.

An unlicensed spectrum is a spectrum that is classified by a country and a region and that can be used for communication of a radio device. The spectrum is generally considered as a shared spectrum, that is, communications devices in different communications systems can use the spectrum provided that a regulatory requirement set for the spectrum by a country or a region is met, and there is no need to apply for a dedicated spectrum grant to a government.

In order to enable communications systems that perform wireless communication by using an unlicensed spectrum to coexist on the spectrum, some countries or regions specify some regulatory requirements that must be met when the unlicensed spectrum is used. For example, a communications device follows a rule of "LBT", that is, before the communications device transmits a signal on a channel in an unlicensed spectrum, channel listening needs to be performed first, and the communications device can perform signal transmission only when a channel listening result is that the channel is idle; if the channel listening result of the communications device on the channel of the unlicensed spectrum is that the channel is busy, the communications device cannot perform signal transmission. To ensure fairness, in one transmission, a duration in which the communications device performs signal transmission on a channel by using an unlicensed spectrum cannot exceed a maximum channel occupancy time (Maximum Channel Occupancy Time, MCOT).

Signal transmission on the unlicensed spectrum includes following basic concepts.

Maximum channel occupancy time (MCOT) means a maximum duration in which a channel using an unlicensed spectrum is allowed to transmit a signal after LBT succeeds, and there are different MCOTs for different channel access priority classes. A maximum value of a current MCOT is 10 ms. It should be understood that the MCOT is a time occupied for signal transmission.

Channel occupancy time (COT) means a duration in which a channel using an unlicensed spectrum is allowed to transmit a signal after LBT succeeds, and channels occupied by a signal in the duration may be discontinuous. A maximum length of a COT cannot exceed 20 ms at a time, and a duration occupied for signal transmission in the COT does not exceed an MCOT.

Channel occupancy time of a network device (namely, a base station) (gNB-initiated COT) is also referred to as COT initiated by a network device, and means a channel occupancy time obtained after LBT of a network device succeeds. In addition to being used for downlink transmission, the channel occupancy time of the network device may be used for uplink transmission of a UE under a specific condition.

After a base station initiates a COT, in addition to using a resource in the COT for downlink transmission, the base station may share the resource in the COT with a terminal for uplink transmission. When the resource in the COT is shared to the terminal for uplink transmission, a channel access mode that can be used by the terminal is Type 2A channel access, Type 2B channel access, or Type 2C channel access, where Type 2A channel access, Type 2B channel access, and Type 2C channel access are all channel access modes based on a listening slot of a fixed length.

Channel occupancy time of a terminal (UE-initiated COT) is also referred to as a terminal-initiated COT, and means a channel occupancy time obtained after LBT of a terminal succeeds.

In NR-U, there are following channel access modes: Type 1 channel access mode, Type 2A channel access mode, Type 2B channel access mode and Type 2C channel access mode.

In the Type 1 channel access mode (also referred to as type 1 channel access manner), channel occupancy with a length of T_{mcot} may be initiated according to a channel access priority class p and based on random backoff multi-slot channel detection with contention window size adjustment. In the Type 1 channel access mode, a base station may share COT with a UE in addition to transmitting data of the base station. In the Type 1 channel access mode, a UE may share COT with a base station in addition to transmitting data of the UE. Table 1 shows a channel access priority class and corresponding parameters when a terminal performs the Type-1 channel access. A smaller value of p indicates a higher channel access priority.

**Table 1 Channel access parameters corresponding to different channel priority classes**

| Channel access priority class (p) | mₚ | CW_{min,p} | CW_{max,p} | T_{mcot,p} | Allowed CWₚ value |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

It should be noted that in the foregoing Table 1, mₚ denotes a quantity of backoff slots corresponding to a channel access priority class *p*, CWₚ denotes a contention window size corresponding to a channel access priority class *p*, CW_{min, p} denotes a minimum value of CWₚ corresponding to a channel access priority class *p*, CW_{max, p} denotes a maximum value of CWₚ corresponding to a channel access priority class *p*, and T_{mcot, p} denotes a maximum channel occupancy duration corresponding to a channel access priority class *p*.

In four Type 1 channel access priority classes in NR-U, p=1 is the highest priority class.

Type 2 channel access mode is a channel access mode based on a channel listening slot of a fixed length.

In the Type 2A channel access mode (also referred to as type 2A channel access mode), single-slot channel detection is performed for 25 us, and channel detection starts 25 us before data is transmitted. After one 16 us-detection and one 9 us-detection, if channels are all idle, then it is considered that the channels are idle and channel access can be performed.

In the Type 2B channel access mode (also referred to as type 2B channel access mode), single-slot channel detection is performed for a fixed length of 16 us. A channel is considered to be idle if the channel is idle in detection of 4 us or above in the last 9 us.

In the Type 2C channel access mode (also referred to as a type 2C channel access mode), transmission is directly performed without channel detection, because if a time difference between previous transmission and current transmission is less than 16 us, then both transmission may be considered as same transmission, but a transmission length does not exceed 584 us.

To better understand embodiments of this application, the technical problems solved in this application are described.

When a sidelink transmission system works on an unlicensed spectrum (which may be referred to as an SL-U system), before sidelink transmission is performed, a terminal needs to determine, by using LBT, whether a channel is idle. If the channel is idle, sidelink transmission may be performed by using the channel; otherwise, sidelink transmission cannot be performed. When the terminal determines, by using the Type 1 channel access mode, that the channel is idle, the terminal may preempt the channel for sidelink transmission, and share channel occupancy time (COT) with another terminal, so as to assist the another terminal in performing channel access. If the terminal receives COT information shared by another terminal, the Type 2 channel access mode, such as channel access mode Type 2A, Type 2B, or Type 2C, may be used in a time corresponding to the COT, so as to improve a success rate of channel access. If the terminal does not receive sharing COT information transmitted by another terminal, the Type 1 channel access mode is generally used. However, in the SL-U system, which terminals may use COT information shared by another terminal to perform channel access, or when a terminal receives a plurality of pieces of COT sharing information, how to use the received COT information for channel access is a problem that needs to be solved in the SL-U system.

Based on the foregoing problem, this application proposes a sidelink transmission solution. When obtaining N pieces of COT sharing information, a terminal device may determine target COT sharing information from the N pieces of COT sharing information, and perform channel access based on a parameter corresponding to the target COT sharing information, so as to optimize sidelink transmission on an unlicensed spectrum.

The following describes the technical solutions in this application in detail by using specific embodiments.

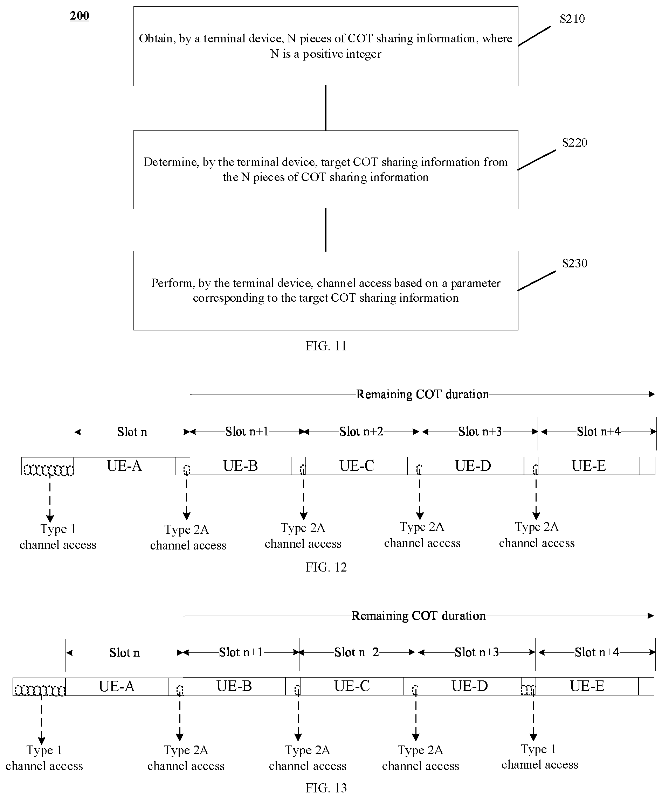

FIG. 11 is a schematic flowchart of a wireless communication method 200 according to an embodiment of this application. As shown in FIG. 11, the wireless communication method 200 may include at least part of following content:
S210: obtaining, by a terminal device, N pieces of COT sharing information, where N is a positive integer;
S220: determining, by the terminal device, target COT sharing information from the N pieces of COT sharing information; and
S230: performing, by the terminal device, channel access based on a parameter corresponding to the target COT sharing information.

In some embodiments, the N pieces of COT sharing information are provided by another terminal.

For example, the N pieces of COT sharing information are respectively provided by other N terminals.

For another example, the N pieces of COT sharing information are provided by a cluster header (which may also be referred to as a central control node). The N pieces of COT sharing information are obtained by the cluster header from the N terminals in a communication group in which the cluster header is located.

In some embodiments, one piece of COT sharing information in the N pieces of COT sharing information is provided by a network device, and other N-1 pieces of COT sharing information in the N pieces of COT sharing information are provided by another terminal.

For example, the other N-1 pieces of COT sharing information in the N pieces of COT sharing information are respectively provided by other N-1 terminals.

For another example, the other N-1 pieces of COT sharing information in the N pieces of COT sharing information are provided by a cluster header (which may also be referred to as a central control node). The other N-1 pieces of COT sharing information in the N pieces of COT sharing information are obtained by the cluster header from N-1 terminals in a communication group in which the cluster header is located.

In some embodiments, the COT sharing information is carried in sidelink control information (Sidelink Control Information, SCI) or a media access control control element (Media Access Control Control Element, MAC CE), where the SCI includes first-stage SCI or second-stage SCI.

In some embodiments, COT sharing information in the N pieces of COT sharing information carries at least one of following information:
resource block set information, COT duration information, a COT start slot position, priority information, channel access type information, and target identity information.

In the invention, the resource block set information is determined based on a resource block set corresponding to a transmission resource of a PSCCH or a PSSCH transmitted together with the COT sharing information, that is, the resource block set information is determined based on a resource block set occupied by a PSCCH or a PSSCH transmitted simultaneously with the COT sharing information. It should be understood that in embodiments of this application, an example in which the COT sharing information carries the resource block set information is used for description. The embodiments of this application are also applicable to a case in which the resource block set information is determined based on a resource block set corresponding to a transmission resource of a PSCCH or a PSSCH transmitted together with the COT sharing information.

Specifically, for example, a UE-A transmits COT sharing information, and the COT sharing information includes resource block set information. A UE-B receives the COT sharing information transmitted by the UE-A, and determines, based on the resource block set information carried in the COT sharing information, whether channel access can be performed by using the COT sharing information.

Specifically, for example, a UE-A transmits COT sharing information, and a PSSCH is transmitted together with the COT sharing information. A transmission resource of the PSSCH is corresponding to N resource block sets, where N is a positive integer. A UE-B receives the COT sharing information transmitted by the UE-A, and determines, based on the transmission resource of the PSSCH transmitted together with the COT sharing information, the N resource block sets corresponding to the transmission resource of the PSSCH, and then the UE-B determines, based on the N resource block sets, whether channel access can be performed by using the COT sharing information.

In some embodiments, the target identity information may be determined based on a target identity information field in SCI. It should be understood that in embodiments of this application, an example in which the COT sharing information carries the target identity information is used for description. The embodiments of this application are also applicable to a case in which the target identity information is determined based on a target identity information field in SCI transmitted together with the COT sharing information.

Specifically, for example, a UE-A transmits COT sharing information, and the COT sharing information includes target identity information. A UE-B receives the COT sharing information transmitted by the UE-A, and determines, based on the target identity information carried in the COT sharing information, whether channel access can be performed by using the COT sharing information.

Specifically, for example, a UE-A transmits COT sharing information, and transmits SCI together with the COT sharing information, where the SCI carries target identity information. A UE-B receives the COT sharing information transmitted by the UE-A, and determines the target identity information based on the SCI transmitted together with the COT sharing information, and the UE-B determines, based on the target identity information, whether channel access can be performed by using the COT sharing information.

In some embodiments, the target identity information may further include a zone identity (Zone ID), that is, a terminal located in a zone corresponding to the Zone ID may use the COT sharing information. In some embodiments, the zone identity (Zone ID) is carried in the COT sharing information, or the zone identity (Zone ID) is carried in SCI or a MAC CE transmitted together with the COT sharing information.

Specifically, for example, a UE-A transmits COT sharing information, and transmits SCI together with the COT sharing information, where the SCI carries information of a Zone ID. A UE-B receives the COT sharing information transmitted by the UE-A and determines the information of the Zone ID based on the SCI transmitted together with the COT sharing information. Then the UE-B determines whether the UE-B belongs to a zone corresponding to the Zone ID, and further determines whether channel access can be performed by using the COT sharing information. For example, if a terminal belongs to the zone corresponding to the Zone ID, channel access can be performed by using the COT sharing information; otherwise, channel access cannot be performed by using the COT sharing information.

Specifically, for example, a UE-A transmits COT sharing information, and carries information of a Zone ID in the COT sharing information. A UE-B receives the COT sharing information transmitted by the UE-A, determines, based on the information of the Zone ID in the COT sharing information, whether the UE-B belongs to a zone corresponding to the Zone ID, and further determines whether channel access can be performed by using the COT sharing information. For example, if a terminal belongs to the zone corresponding to the Zone ID, channel access can be performed by using the COT sharing information; otherwise, channel access cannot be performed by using the COT sharing information.

In some embodiments, when a first terminal transmits COT sharing information, the COT sharing information (or SCI or a MAC CE that is transmitted simultaneously with the COT sharing information) carries information of a first Zone ID, and only a terminal located in a zone corresponding to the information of the first Zone ID can use the COT sharing information. In addition, the COT sharing information (or the SCI or MAC CE that is transmitted simultaneously with the COT sharing information) carries information of a second Zone ID, and the information of the second Zone ID is used to indicate a zone in which the first terminal is located. When receiving the COT sharing information, a second terminal determines whether the second terminal belongs to a zone corresponding to the first Zone ID and closest to the zone in which the first terminal is located. For example, if the second terminal belongs to the zone corresponding to the first Zone ID and corresponding to the first Zone ID and closest to the zone in which the first terminal is located, channel access can be performed by using the COT sharing information; otherwise, channel access cannot be performed by using the COT sharing information.

Specifically, for example, the resource block set information is used to indicate that LBT performed by another device (for example, a terminal device and/or a network device) on a resource block set indicated by the resource block set information succeeds, where the another device refers to a device that transmits the COT sharing information.

Specifically, for example, the COT duration information is used to determine a remaining COT duration. Optionally, for the i^{th} COT sharing information in the N pieces of COT sharing information, a remaining COT duration included in the i^{th} COT sharing information may be determined based on a slot in which the i^{th} COT sharing information is located, for example, a starting position of the slot in which the i^{th} COT sharing information is located is a starting position corresponding to the remaining COT duration, or a starting position of a next slot of the slot in which the i^{th} COT sharing information is located is a starting position corresponding to the remaining COT duration.

Specifically, for example, a COT start slot position is used to determine a starting position corresponding to a remaining COT duration. Optionally, for the i^{th} COT sharing information in the N pieces of COT sharing information, COT start slot information included in the i^{th} COT sharing information is used to indicate a slot offset, and the slot offset is used to indicate a slot offset of a starting position corresponding to a remaining COT duration relative to a slot in which the i^{th} COT sharing information is located.

Specifically, for example, the priority information indicates a sidelink priority class or a channel access priority class (Channel Access Priority Class, CAPC).

Specifically, for example, the channel access type information is used to indicate a type of channel access. Optionally, the channel access type information includes at least one of following: Type 2A, Type 2B, Type 2C, and Type 1. Preferably, the channel access type is Type 2A.

It should be understood that the channel access type information is used to indicate a channel access type used by another terminal to perform channel access in a shared COT duration.

In some embodiments, the terminal device may determine a channel access type within the shared COT duration based on pre-configuration information or network configuration information. For example, resource pool configuration information or sidelink band width part (Band Width Part, BWP) configuration information includes indication information, and the indication information indicates a channel access type used by a terminal to perform channel access by using a shared COT. In this case, COT sharing information does not need to indicate the channel access type (that is, the COT sharing information may not carry the channel access type information).

Specifically, for example, for the i^{th} piece of COT sharing information in the N pieces of COT sharing information, target identity information included in the i^{th} piece of COT sharing information is used to determine a terminal that may use the i^{th} piece of COT sharing information. For example, the target identity information includes terminal identity information, and only a terminal corresponding to the terminal identity information may use the i^{th} piece of COT sharing information for channel access. For another example, the target identity information includes group identity information, and only a terminal that belongs to a group corresponding to the group identity information may perform channel access by using the i^{th} piece of COT sharing information. For another example, the target identity information includes service type information, and only a terminal that transmits a service type corresponding to the service type information may use the i^{th} piece of COT sharing information for channel access. It should be understood that the target identity information may include partial information of the terminal identity information, partial information of the group identity information, or partial information of the service type information. For example, the terminal identity information is 24 bits in length, and the target identity information included in the COT sharing information is 16 bits, that is, including partial terminal identity information.

In some embodiments, the terminal device determines, based on the target COT sharing information, a value of an information field included in the COT sharing information transmitted by the terminal device.

In some embodiments, when the terminal device performs channel access by using the parameter corresponding to the target COT sharing information. In addition, when transmitting COT sharing information of the terminal device, the terminal device may determine, based on the target COT sharing information, the parameter carried in the COT sharing information transmitted by the terminal device.

For example, resource block set information carried in the COT sharing information transmitted by the terminal device may be consistent with resource block set information carried in the target COT sharing information, or resource block set information carried in the COT sharing information transmitted by the terminal device may be determined based on resource block set information carried in the target COT sharing information.

For another example, priority information carried in the COT sharing information transmitted by the terminal device may be consistent with priority information carried in the target COT sharing information, or priority information carried in the COT sharing information transmitted by the terminal device may be determined based on priority information carried in the target COT sharing information, or priority information carried in the COT sharing information transmitted by the terminal device is corresponding to a sidelink priority class of the terminal device, or priority information carried in the COT sharing information transmitted by the terminal device is corresponding to a lower priority class of a priority class corresponding to priority information carried in the target COT sharing information and a priority class in a sidelink priority class of the terminal device, or priority information carried in the COT sharing information transmitted by the terminal device is corresponding to a higher priority class of a priority class corresponding to priority information carried in the target COT sharing information and a priority class in a sidelink priority class of the terminal device.

For another example, target identity information carried in the COT sharing information transmitted by the terminal device may be consistent with target identity information carried in the target COT sharing information, or target identity information carried in the COT sharing information transmitted by the terminal device may be determined based on target identity information carried in the target COT sharing information.

For another example, a COT duration carried in the COT sharing information transmitted by the terminal device may be determined based on a remaining COT duration determined based on a slot in which a terminal transmits COT information.

In some embodiments, the terminal device may determine, based on priority information, target identity information, resource block set information, whether channel access can be performed by using the COT sharing information.

In some embodiments, the foregoing step S220 may specifically include:
determining, by terminal device, the target COT sharing information from the N pieces of COT sharing information based on first information.

The first information includes at least one of following: priority information corresponding to to-be-transmitted sidelink data of the terminal device, identity information of the terminal device, and resource block set information determined to be used by the terminal device.

In some embodiments, the priority information corresponding to the to-be-transmitted sidelink data is sidelink priority information corresponding to the to-be-transmitted sidelink data; or the priority information corresponding to the to-be-transmitted sidelink data is channel access priority information corresponding to the to-be-transmitted sidelink data.

In some embodiments, when sidelink transmission is performed on an unlicensed spectrum or a shared spectrum, the terminal device determines a channel access priority class based on to-be-transmitted sidelink data or priority information of a sidelink service.

In some embodiments, the channel access priority information corresponding to the to-be-transmitted sidelink data is determined based on a first correspondence.

The first correspondence represents a correspondence between a channel access priority class and one of following information: a sidelink priority class, delay information corresponding to a sidelink service, reliability information corresponding to a sidelink service, and quality of service (Quality of Service, QoS) information corresponding to a sidelink service.

Specifically, for example, the QoS information corresponding to the sidelink service is a PC5 5G QoS identifier (PC5 5G QoS identifier, PQI).

In some embodiments, the terminal device obtains the first correspondence based on pre-configuration information (for example, resource pool configuration information or sidelink BWP configuration information) or network configuration information (for example, resource pool configuration information or sidelink BWP configuration information).

In some embodiments, in a case that the first information includes at least the priority information corresponding to the to-be-transmitted sidelink data, the terminal device determines that first COT sharing information in the N pieces of COT sharing information is the target COT sharing information. A priority class corresponding to the to-be-transmitted sidelink data is higher than or equal to a priority class corresponding to first priority information, and the priority class corresponding to the first priority information is determined based on the first COT sharing information.

In some embodiments, the priority class corresponding to the first priority information includes a priority class threshold or a priority class value.

In some embodiments, each piece of COT sharing information in the N pieces of COT sharing information corresponds to one piece of first priority information. For the i^{th} COT sharing information, in a case that a priority class corresponding to the to-be-transmitted sidelink data is higher than or equal to a priority class corresponding to first priority information corresponding to the i^{th} COT sharing information, the terminal device may use the i^{th} COT sharing information to perform channel access; otherwise, channel access cannot be performed by using the i^{th} COT sharing information.

In some embodiments, the first priority information is obtained by the terminal device based on the first COT sharing information. For example, the first COT sharing information includes the first priority information.

In some embodiments, the first priority information is determined by the terminal device based on a priority information field in sidelink control information (Sidelink Control Information, SCI) of a device that provides the first COT sharing information. For example, the terminal device uses a priority carried in the priority information field in the SCI of the device that provides the first COT sharing information as the first priority information. For another example, the terminal device determines a channel access priority class based on the priority information field in the SCI of the device that provides the first COT sharing information, and further determines, based on the channel access priority class, the priority class corresponding to the first priority information, for example, uses the channel access priority class as the priority class corresponding to the first priority information.

In some embodiments, the priority class corresponding to the first priority information may alternatively be determined based on pre-configuration information (such as resource pool configuration information or sidelink BWP configuration information) or network configuration information (such as resource pool configuration information or sidelink BWP configuration information), or the priority class corresponding to the first priority information may alternatively be obtained from pre-configuration information (such as resource pool configuration information or sidelink BWP configuration information) or network configuration information (such as resource pool configuration information or sidelink BWP configuration information).

In some embodiments, the first priority information is corresponding to sidelink priority information, or the first priority information is corresponding to channel access priority information.

In some embodiments, in a case that the first priority information is corresponding to the sidelink priority information, the priority information corresponding to the to-be-transmitted sidelink data is sidelink priority information corresponding to the to-be-transmitted sidelink data.

In some embodiments, in a case that the first priority information is corresponding to the channel access priority information, the priority information corresponding to the to-be-transmitted sidelink data is channel access priority information corresponding to the to-be-transmitted sidelink data.

In some embodiments, when the to-be-transmitted sidelink data is a physical sidelink control channel (Physical Sidelink Control Channel, PSCCH), a priority class corresponding to sidelink data is determined based on a priority class in SCI carried by the PSCCH; when the to-be-transmitted sidelink data is a physical sidelink shared channel (Physical Sidelink Shared Channel, PSSCH), a priority class corresponding to sidelink data is determined based on a priority class in SCI for scheduling the PSSCH; when the to-be-transmitted sidelink data is sidelink feedback information, a priority class corresponding to sidelink data is determined based on a priority class of a PSSCH corresponding to the sidelink feedback information; and when the to-be-transmitted sidelink data is a sidelink synchronization signal block (Sidelink Synchronization Signal Block, S-SSB), a priority class of a sidelink synchronization block is determined based on pre-configuration information or network configuration information.

Specifically, for example, as shown in FIG. 12, a UE-A accesses a channel by using the Type 1 channel access mode before a slot n. If channel access succeeds, the UE-A performs sidelink transmission in the slot n, and carries COT sharing information in SCI. A starting position of a COT shared duration is a next slot of the slot n, namely, a slot n+1. A remaining COT duration for COT sharing is four slots, namely, four slots starting from the slot n+1, that is, a shared COT duration includes the slot n+1 to a slot n+4. Optionally, if the COT sharing information indicates that a starting position of COT sharing is a slot n+2, and a COT duration is two slots, then it indicates that a shared COT range is two slots starting from the slot n+2, that is, corresponding to the slot n+2 and the slot n+3. Optionally, the COT sharing information further includes priority information. If the priority information indicates a sidelink priority class, for example, the priority information indicates that a priority class value is 3, that is, only another terminal whose priority class is higher than or equal to the priority class can use the COT sharing information for channel access. For example, the Type 2A, Type 2B, or Type 2C channel access type is used in slot n+1 to slot n+4 for channel access. As shown in FIG. 12, if a sidelink priority class of each of a UE-B, a UE-C, a UE-D, and a UE-E is higher than a priority class indicated in the COT sharing information, then the UE-B, the UE-C, the UE-D, and the UE-E perform channel access in the Type 2A channel access mode in a COT duration range. If a priority class of another terminal is lower than the priority class indicated in the COT sharing information, then the COT sharing information cannot be used for channel access, and only the Type 1 channel access type can be used for channel access. As shown in FIG. 13, if a value of priority information included in COT sharing information transmitted by a UE-A is 3, and a value of a priority class of a UE-E is 5, it indicates that the priority class of the UE-E is lower than a priority class indicated in the COT sharing information (a smaller value of a priority class indicates a higher priority class). In this case, the UE-E cannot perform channel access by using the Type 2A channel access type in a COT duration range, or the UE-E cannot perform channel access by using the COT sharing information transmitted by the UE-A, and the UE-E can perform channel access by using only the Type 1 channel access mode. Optionally, if a priority class included in the COT sharing information transmitted by the UE-A is represented as a channel access priority class, as shown in Table 1, and p = 2, then the COT sharing information can be used for channel access only when a channel access priority class corresponding to sidelink data to be transmitted by another terminal is higher than or equal to 2 (that is, the channel access priority class is equal to 1 or 2); otherwise, the COT sharing information cannot be used for channel access.

In some embodiments, when the first information includes at least the identity information of the terminal device, the terminal device determines that second COT sharing information in the N pieces of COT sharing information is the target COT sharing information. The second COT sharing information includes target identity information, or SCI transmitted simultaneously with the second COT sharing information includes target identity information, and an identity corresponding to the target identity information includes an identity of the terminal device, or a service type corresponding to the target identity information is a service type corresponding to to-be-transmitted sidelink data of the terminal device, or a zone in which the terminal is located belongs to a zone corresponding to Zone ID information carried in the target identity information.

Specifically, for example, the target identity information included in the second COT sharing information is used to determine a terminal that may use the second COT sharing information. For another example, the SCI transmitted simultaneously with the second COT sharing information includes target identity information, and the target identity information is used to determine a terminal that may use the second COT sharing information.

Optionally, the target identity information includes terminal identity information, and only a terminal corresponding to the terminal identity information may use the second COT sharing information for channel access. Alternatively, the target identity information includes group identity information, and only a terminal that belongs to a group corresponding to the group identity information may use the second COT sharing information for channel access. Alternatively, the target identity information includes service type information, and only a terminal that transmits a service type corresponding to the service type information may use the second COT sharing information for channel access. Alternatively, the target identity information includes Zone ID information, and only a terminal located in a zone corresponding to the Zone ID information may use the second COT sharing information for channel access. It should be understood that the terminal identity information included in the target identity information may be partial information of the terminal identity information, or the group identity information included in the target identity information may be partial information of the group identity information, or the service type information included in the target identity information may be partial information of the service type information, or the Zone ID information included in the target identity information may be partial information of the Zone ID information.

In some embodiments, the target identity information includes identity information of a terminal allowed to use the second COT sharing information; or
the target identity information includes identity information of a terminal group allowed to use the second COT sharing information; or the target identity information includes zone identity information corresponding to a zone in which a terminal allowed to use the second COT sharing information is located.

For example, the i^{th} piece of COT sharing information in the N pieces of COT sharing information includes terminal identity information. For example, the terminal identity information is used to indicate a UE-C. In this case, only the UE-C may perform channel access by using the Type 2A, Type 2B, or Type 2C channel access type in a COT duration range corresponding to the i^{th} piece of COT sharing information. Another terminal cannot perform channel access by using the Type 2A, Type 2B, or Type 2C channel access type in the COT duration range corresponding to the i^{th} piece of COT sharing information.

For another example, a UE-A, a UE-B, a UE-C, and a UE-D belong to a first communication group, and a UE-E does not belong to the first communication group. COT sharing information transmitted by the UE-A includes group identity information, and the group identity information is used to indicate the first communication group. Therefore, a terminal in the first communication group, such as the UE-B, the UE-C, and the UE-D, may perform channel access by using the Type 2A, Type 2B, or Type 2C channel access type in a COT duration range corresponding to the COT sharing information transmitted by the UE-A; however, a terminal out of the first communication group, such as the UE-E, cannot perform channel access by using the Type 2A, Type 2B, or Type 2C channel access type in the COT duration range corresponding to the COT sharing information transmitted by the UE-A, as shown in FIG. 13.

For another example, the COT sharing information transmitted by the UE-A includes service type information, and the service type information is used to indicate a service type A. A service type corresponding to to-be-transmitted sidelink data of the UE-B is the service type A, a service type corresponding to to-be-transmitted sidelink data of the UE-C is the service type A, a service type corresponding to to-be-transmitted sidelink data of the UE-D is the service type A, and a service type corresponding to to-be-transmitted sidelink data of the UE-E is a service type B. In this case, the UE-B, the UE-C, and the UE-D may perform channel access by using the Type 2A, Type 2B, or Type 2C channel access type in a COT duration range corresponding to the COT sharing information transmitted by the UE-A; however, the UE-E cannot perform channel access by using the Type 2A, Type 2B, or Type 2C channel access type in the COT duration range corresponding to the COT sharing information transmitted by the UE-A, as shown in FIG. 13.

In the invention, the first information includes at least the resource block set information, the terminal device determines that third COT sharing information in the N pieces of COT sharing information is the target COT sharing information. The third COT sharing information includes target resource block set information, and a resource block set corresponding to a transmission resource of a PSCCH or a PSSCH transmitted simultaneously with the third COT sharing information includes a resource block set determined to be used by the terminal device.

Specifically, for example, the COT sharing information is carried in SCI or a MAC CE. When the UE-A transmits the COT sharing information, a PSSCH is simultaneously transmitted, and a target resource block set may be determined based on resource block set information corresponding to a transmission resource of the PSSCH. When the UE-A transmits the COT sharing information, the PSSCH is simultaneously transmitted. Therefore, that the UE-A transmits the PSSCH by using the resource block set corresponding to the transmission resource of the PSSCH indicates that LBT performed by the UE-A on the resource block set succeeds. The UE-B obtains the COT sharing information transmitted by the UE-A, and may determine a target resource block set based on the transmission resource of the PSSCH transmitted simultaneously with the COT sharing information. Only when the resource block set indicated by the target resource block set information includes a resource block set corresponding to a sidelink transmission resource to be transmitted by the UE-B, the UE-B can perform channel access by using the COT sharing information.

Specifically, for example, the UE-A carries target resource block set information in the COT sharing information, and the target resource block set information is used to indicate that LBT or channel access performed by the UE-A on a resource block set corresponding to the target resource block set information succeeds. The UE-B obtains the COT sharing information transmitted by the UE-A, and determines, based on the target resource block set information carried in the COT sharing information, whether channel access can be performed by using the COT sharing information.

In some embodiments, when the terminal device determines that a first resource block set is used for sidelink transmission, the terminal device can perform channel access by using the COT sharing information only when the resource block set indicated by the target resource block set information in the COT sharing information obtained by the terminal device includes the first resource block set.

For example, a resource pool includes three resource block sets, which are respectively corresponding to a resource block set 0, a resource block set 1, and a resource block set 2. The first terminal determines that sidelink transmission is to be performed in the resource block set 1. A first terminal receives COT sharing information a transmitted by a second terminal, where target resource block set information included in the COT sharing information a indicates the resource block set 0 and the resource block set 1; the first terminal receives COT sharing information b transmitted by a third terminal, where target resource block set information included in the COT sharing information b indicates the resource block set 0; and the first terminal receives COT sharing information c transmitted by a fourth terminal, where target resource block set information included in the COT sharing information c indicates the resource block set 1 and the resource block set 2. In this case, the first terminal performs channel access by using COT sharing information (namely, the COT sharing information a) transmitted by the second terminal, or the first terminal performs channel access by using COT sharing information (namely, the COT sharing information c) transmitted by the fourth terminal, and cannot perform channel access by using COT sharing information (namely, the COT sharing information b) transmitted by the third terminal.

For another example, a resource pool includes three resource block sets, which are respectively corresponding to a resource block set 0, a resource block set 1, and a resource block set 2. The first terminal determines that sidelink transmission is to be performed in the resource block set 1 and the resource block set 2. The first terminal receives COT sharing information A transmitted by a second terminal, where target resource block set information included in the COT sharing information A indicates the resource block set 0 and the resource block set 1; the first terminal receives COT sharing information B transmitted by a third terminal, where target resource block set information included in the COT sharing information B indicates the resource block set 0; and the first terminal receives COT sharing information C transmitted by a fourth terminal, where target resource block set information included in the COT sharing information C indicates the resource block set 1 and the resource block set 2. In this case, the first terminal can perform channel access only by using COT sharing information (namely, the COT sharing information C) transmitted by the fourth terminal, and cannot perform channel access by using COT sharing information (namely, the COT sharing information A) transmitted by the second terminal and COT sharing information (namely, the COT sharing information B) transmitted by the third terminal.

In some embodiments, the i^{th} COT sharing information in the N pieces of COT sharing information carries first priority information, target resource block set information, and target identity information. When a terminal device receives the i^{th} COT sharing information, and only when the target identity information in the i^{th} COT sharing information includes identity information of the terminal device, and a priority class of the terminal device is higher than or equal to a priority class indicated by the first priority information in the i^{th} COT sharing information, as well as a resource block set indicated by the target resource block set information in the i^{th} COT sharing information includes a resource block set to be used by the terminal device for sidelink transmission, the terminal device can perform channel access by using a parameter corresponding to the i^{th} COT sharing information, for example, perform channel access by using the Type 2A channel access mode in a COT duration corresponding to the i^{th} COT sharing information.

In some embodiments, the i^{th} COT sharing information in the N pieces of COT sharing information carries first priority information, target resource block set information, and target identity information. When a terminal device receives the i^{th} COT sharing information, and when the target identity information in the i^{th} COT sharing information includes identity information of the terminal device, or a priority class of the terminal device is higher than or equal to a priority class indicated by the first priority information in the i^{th} COT sharing information, or a resource block set indicated by the target resource block set information in the i^{th} COT sharing information includes a resource block set to be used by the terminal device for sidelink transmission, the terminal device can perform channel access by using a parameter corresponding to the i^{th} COT sharing information, for example, perform channel access by using the Type 2A channel access mode in a COT duration corresponding to the i^{th} COT sharing information.

In some embodiments, the terminal device obtains first indication information from resource pool configuration information or sidelink BWP configuration information. The first indication information is used to instruct the terminal device to determine the target COT sharing information from the N pieces of COT sharing information based on the first information. That is, after learning content indicated by the first indication information, the terminal device determines the target COT sharing information from the N pieces of COT sharing information based on the first information.

Specifically, for example, the first indication information may be one or more information elements (Information element, IE) in the resource pool configuration information or the sidelink BWP configuration information, and the information element may be a field, an element, or a field. This is not limited in this application.

Specifically, for example, if the first indication information indicates priority information corresponding to to-be-transmitted sidelink data of the terminal device, the terminal device determines the target COT sharing information from the N pieces of COT sharing information based on the priority information corresponding to the to-be-transmitted sidelink data.

Specifically, for example, if the first indication information indicates identity information of the terminal device, the terminal device determines the target COT sharing information from the N pieces of COT sharing information based on the identity information of the terminal device.

Specifically, for example, if the first indication information indicates resource block set information determined to be used by the terminal device, the terminal device determines the target COT sharing information from the N pieces of COT sharing information based on the resource block set information determined to be used by the terminal device.

Specifically, for example, if the first indication information indicates priority information, the terminal device determines the target COT sharing information from the N pieces of COT sharing information based on the priority information.

Specifically, for example, if the first indication information indicates resource block set information, the terminal device determines the target COT sharing information from the N pieces of COT sharing information based on the resource block set information.

Specifically, for example, if the first indication information indicates target identity information, the terminal device determines the target COT sharing information from the N pieces of COT sharing information based on the target identity information.

In some embodiments, the foregoing step S220 may specifically include:
determining, by terminal device, the target COT sharing information from the N pieces of COT sharing information based on second information, where the second information includes but is not limited to at least one of following: a remaining COT duration, priority information corresponding to COT sharing information, a maximum remaining COT duration, the highest priority class, the lowest priority class, and a device that provides COT sharing information.

In some embodiments, the second information may be indicated in resource pool configuration information or sidelink BWP configuration information.

In some embodiments, the priority information corresponding to the COT sharing information is sidelink priority information, or the priority information corresponding to the COT sharing information is channel access priority information.

Specifically, for example, the highest priority class may be the highest sidelink priority class, or the highest priority may be the highest channel priority class.

Specifically, for example, the lowest priority may be the lowest sidelink priority class, or the lowest priority may be the lowest channel priority class.

In some embodiments, the remaining COT duration is determined based on a time domain resource in which to-be-transmitted sidelink data of the terminal device is located.

Specifically, for example, the terminal device determines, based on a first remaining COT duration carried in the N pieces of COT sharing information, N second remaining COT durations, corresponding to N first remaining COT durations, in a slot position where to-be-transmitted sidelink data of the terminal device is located, and the terminal device determines the target COT sharing information based on a maximum value of the N second remaining COT durations.

In some embodiments, in a case that the second information includes at least the remaining COT duration, the terminal device determines the target COT sharing information based on the remaining COT duration. By default, or according to a protocol, the terminal device selects COT sharing information with a maximum remaining duration as the target COT sharing information.

In some embodiments, in a case that the second information includes at least the remaining COT duration, the terminal device determines that fourth COT sharing information in the N pieces of COT sharing information as the target COT sharing information. Optionally, the fourth COT sharing information is COT sharing information corresponding to the longest remaining COT duration in the N pieces of COT sharing information. Optionally, the fourth COT sharing information is COT sharing information whose remaining COT duration is greater than or equal to a first threshold in the N pieces of COT sharing information.

In some embodiments, a remaining COT duration corresponding to the fourth COT sharing information is greater than or equal to the first threshold, or a remaining COT duration corresponding to each piece of COT sharing information in the N pieces of COT sharing information is greater than or equal to the first threshold.

In some embodiments, in a case that COT information whose remaining COT duration is greater than or equal to a first threshold is not included in the N pieces of COT sharing information, the terminal device does not transmit COT sharing information when accessing a channel by using a parameter corresponding to the fourth COT sharing information. In other words, if the COT sharing information detected by the terminal device does not include COT sharing information that meets the first threshold, the terminal device does not transmit the COT sharing information when performing channel access by using the COT sharing information.

In some embodiments, the first threshold is obtained based on pre-configuration information or network device configuration information. For example, the first threshold is indicated in resource pool configuration information or sidelink BWP configuration information.

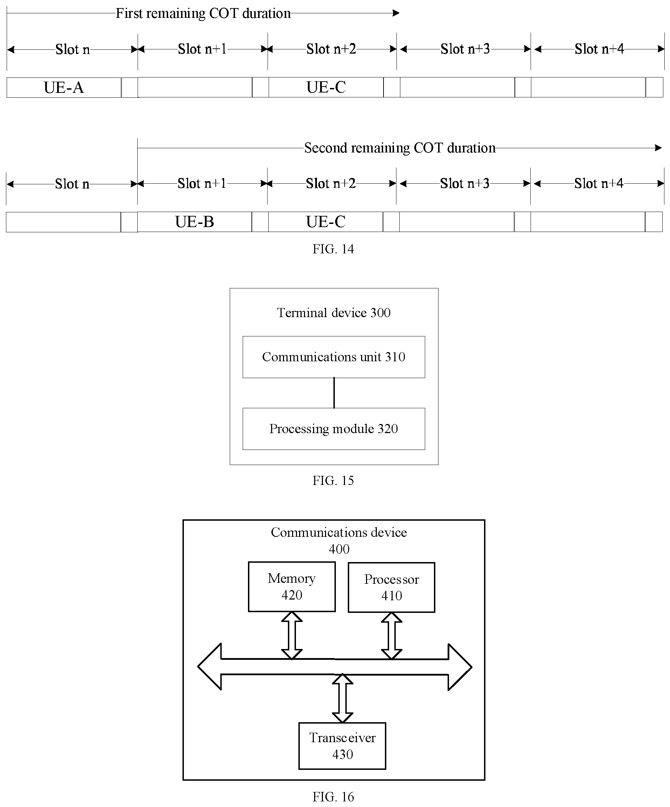

Specifically, for example, as shown in FIG. 14, a UE-C (namely, the terminal device in this application) determines, based on resource selection or network scheduling information, that sidelink data is to be transmitted in a slot n+2, and a value of a sidelink priority class is 2. The UE-C receives, in a slot n, COT sharing information A transmitted by a UE-A, where target identity information included in the COT sharing information A includes an identity of the UE-C, and a priority class value carried in the COT sharing information A is 4. Therefore, the UE-C can perform channel access by using the COT sharing information A transmitted by the UE-A, and a remaining COT duration (namely, a first remaining COT duration in FIG. 14) corresponding to the COT sharing information A is three slots, that is, three slots starting from the slot n, including the slot n to a slot n+2. Further, the UE-C receives, in a slot n+1, COT sharing information B transmitted by a UE-B, where target identity information included in the COT sharing information B includes an identity of the UE-C, and a priority class value carried in the COT sharing information B is 3. Therefore, the UE-C can perform channel access by using the COT sharing information B transmitted by the UE-B, and a remaining COT duration (namely, a second remaining COT duration in FIG. 14) corresponding to the COT sharing information B is four slots, that is, four slots starting from the slot n+1, including the slot n+1 to a slot n+4. The slot n+2 is located in a duration range corresponding to shared COT. Therefore, the UE-C performs channel access by using the Type 2A channel access type before the slot n+2. Because the UE-C performs channel access in the slot n+2, the UE-C determines, based on the COT sharing information A, that a remaining COT duration is one slot at the slot n+2, and determines, based on the COT sharing information B, that a remaining COT duration is three slots at the slot n+2. Therefore, the UE-C performs channel access by selecting a parameter corresponding to COT sharing information corresponding to a maximum remaining COT duration, that is, the UE-C performs channel access based on a parameter corresponding to the COT sharing information B.

As shown in FIG. 14, the UE-C performs channel access based on a parameter corresponding to the COT sharing information B transmitted by the UE-B. Therefore, after the UE-C accesses a channel successfully, when the UE-C transmits sidelink data, COT sharing information carried in sidelink SCI is determined based on the COT sharing information B. For example, priority information in the COT sharing information transmitted by the UE-C is determined based on a priority class in the COT sharing information B, that is, the priority class value is 3. A remaining COT duration in the COT sharing information transmitted by the UE-C is determined based on a remaining COT duration in the COT sharing information B, that is, the remaining COT duration is three slots, including a slot n+2 to a slot n+4.

As shown in FIG. 14, when receiving the COT sharing information A transmitted by the UE-A, the UE-C determines that a first remaining COT duration at the slot n+2 is one slot; and when receiving the COT sharing information B transmitted by the UE-B, the UE-C determines that a second remaining COT duration at the slot n+2 is three slots. If the UE-C performs channel access by using the COT sharing information A transmitted by the UE-A, the UE-C cannot transmit COT sharing information in this case, because the remaining COT duration after the slot n+2 is 0. However, if the UE-C performs channel access by using the COT sharing information B transmitted by the UE-B, the UE-C can transmit COT sharing information, and indicate that the remaining COT duration is three slots, including a slot n+3 and a slot n+4 following the slot n+2. Therefore, another terminal can still perform channel access by using the COT sharing information transmitted by the UE-C. In this case, the first threshold may be configured as two slots, and only COT sharing information whose determined remaining COT duration is greater than or equal to two slots is available COT sharing information. Therefore, in this example, available COT sharing information is the COT sharing information B, and does not include the COT sharing information A.

In some embodiments, an information element included in the resource pool configuration information indicates a remaining COT duration or a COT duration, that is, the terminal device determines, based on the remaining COT duration or the COT duration, COT sharing information to be used. By default, or according to a protocol, the terminal device selects COT sharing information with a maximum remaining duration as the COT sharing information to be used.

In some embodiments, when the second information includes at least the maximum remaining COT duration, the terminal device determines that COT sharing information with a maximum remaining COT duration in the N pieces of COT sharing information as the target COT sharing information.

In some embodiments, one information element included in the resource pool configuration information indicates a maximum remaining duration, and the terminal device selects COT sharing information with a maximum remaining COT duration as COT sharing information to be used.

In some embodiments, in a case that the second information includes at least the priority information corresponding to the COT sharing information, the terminal device determines the target COT sharing information based on the priority information corresponding to the COT sharing information. By default, or according to a protocol, the terminal device selects COT sharing information with the lowest priority class as the target COT sharing information, or the terminal device selects COT sharing information with the highest priority class as the target COT sharing information.

In some embodiments, an information element included in the resource pool configuration information indicates a priority class, and the priority class indicates, for example, a sidelink priority class. Then the terminal device determines, based on the sidelink priority class, COT sharing information to be used. By default, or according to a protocol, the terminal device selects COT sharing information corresponding to the lowest sidelink priority class or the highest sidelink priority class as the COT sharing information to be used.

In some embodiments, an information element included in the resource pool configuration information indicates a priority class, and the priority class indicates, for example, a channel access priority class. Then the terminal device determines, based on the channel access priority class, COT sharing information to be used. By default, or according to a protocol, the terminal device selects COT sharing information corresponding to the lowest channel access priority class or the highest channel access priority class as the COT sharing information to be used.

In some embodiments, in a case that the second information includes at least the priority information corresponding to the COT sharing information, the terminal device determines that fifth COT sharing information in the N pieces of COT sharing information is the target COT sharing information. The fifth COT sharing information is COT sharing information, in the N pieces of COT sharing information, corresponding to the lowest priority class, or the fifth COT sharing information is COT sharing information, in the N pieces of COT sharing information, corresponding to the highest priority class.

Specifically, for example, the fifth COT sharing information is COT sharing information, in the N pieces of COT sharing information, corresponding to the lowest sidelink priority class, or the fifth COT sharing information is COT sharing information, in the N pieces of COT sharing information, corresponding to the lowest channel priority class.

Specifically, for example, the fifth COT sharing information is COT sharing information, in the N pieces of COT sharing information, corresponding to the highest sidelink priority class, or the fifth COT sharing information is COT sharing information, in the N pieces of COT sharing information, corresponding to the highest channel priority class.

It should be understood that in a sidelink system, a higher value of a priority class indicates a lower corresponding priority class. For a channel access level, a higher value of the channel access level indicates a lower corresponding channel access level.

For example, when determining COT sharing information, the terminal device determines, based on the lowest priority class, the COT sharing information to be used. Thus, when the terminal device transmits the COT sharing information, priority information carried in the COT sharing information also corresponds to the lowest priority class, so that more terminals can use the COT sharing information, and a probability that another terminal successfully accesses a channel can be improved.

For another example, when determining COT sharing information, the terminal device determines, based on the highest priority class, the COT sharing information to be used. Thus, when the terminal device transmits the COT sharing information, priority information carried in the COT sharing information also corresponds to the highest priority class. Only a terminal device whose priority class is higher than the highest priority class can use the COT sharing information, so that a quantity of other terminals or a success probability of accessing a channel by another terminal is reduced, a congestion level of a system may be reduced, and transmission performance of a terminal with a high priority class are ensured.

In some embodiments, in a case that the second information includes at least the highest priority class, the terminal device determines that COT sharing information, in the N pieces of COT sharing information, corresponding to the highest sidelink priority class is the target COT sharing information; or the terminal device determines that COT sharing information, in the N pieces of COT sharing information, corresponding to the highest channel priority class is the target COT sharing information.

In an embodiment, an information element included in the resource pool configuration information indicates the highest priority class, and the priority class indicates, for example, a sidelink priority class or a channel access priority class. Then the terminal device selects COT sharing information corresponding to the highest priority class as the COT sharing information to be used.

In some embodiments, in a case that the second information includes at least the lowest priority class, the terminal device determines that COT sharing information, in the N pieces of COT sharing information, corresponding to the lowest sidelink priority class is the target COT sharing information; or the terminal device determines that COT sharing information, in the N pieces of COT sharing information, corresponding to the lowest channel priority class is the target COT sharing information.

In an embodiment, an information element included in the resource pool configuration information indicates the lowest priority class, and the priority class indicates, for example, a sidelink priority class or a channel access priority class, then the terminal device selects COT sharing information corresponding to the lowest priority class as the COT sharing information to be used.

In some embodiments, when the second information includes at least the device that provides COT sharing information, the terminal device determines that COT sharing information, provided by a network device, in the N pieces of COT sharing information is the target COT sharing information.

Specifically, for example, when the network device initiates COT sharing, the network device may transmit corresponding COT sharing information to each terminal by using downlink control information (Downlink Control Information, DCI) or radio resource control (Radio Resource Control, RRC) signaling. The network device may indicate same COT sharing information to all terminals, that is, ensuring that a terminal in a cell can perform channel access based on the same COT sharing information. Therefore, when a terminal receives a plurality of pieces of COT sharing information, if the COT sharing information transmitted by the network device is included, the terminal may perform channel access based on the COT sharing information transmitted by the network device.

In some embodiments, the terminal device obtains second indication information from resource pool configuration information or sidelink BWP configuration information. The second indication information is used to instruct the terminal device to determine the target COT sharing information from the N pieces of COT sharing information based on the second information. That is, after learning content indicated by the second information, the terminal device determines the target COT sharing information from the N pieces of COT sharing information based on the second information.

Specifically, for example, the second indication information may be one or more information elements (IE) in the resource pool configuration information or the sidelink BWP configuration information, and the information element may be a field, an element, or a field. This is not limited in this application.

Specifically, for example, if the second indication information indicates a remaining COT duration, the terminal device determines the target COT sharing information from the N pieces of COT sharing information based on the remaining COT duration.

Specifically, for example, if the second indication information indicates priority information corresponding to the COT sharing information, the terminal device determines the target COT sharing information from the N pieces of COT sharing information based on the priority information corresponding to the COT sharing information.

Specifically, for example, if the second indication information indicates a maximum remaining COT duration, the terminal device determines the target COT sharing information from the N pieces of COT sharing information based on the maximum remaining COT duration.

Specifically, for example, if the second indication information indicates the highest priority class, the terminal device determines the target COT sharing information from the N pieces of COT sharing information based on the highest priority class.

Specifically, for example, if the second indication information indicates the lowest priority class, the terminal device determines the target COT sharing information from the N pieces of COT sharing information based on the lowest priority class.

Specifically, for example, if the second indication information indicates a device that provides COT sharing information, the terminal device determines the target COT sharing information from the N pieces of COT sharing information based on the device that provides COT sharing information.

In some embodiments, S210 may specifically include:
obtaining, by the terminal device, M pieces of COT sharing information; and determining, by the terminal device, the N pieces of COT sharing information from the M pieces of COT sharing information based on third information, where M is a positive integer, and N ≤ M.

The third information includes at least one of following: priority information corresponding to to-be-transmitted sidelink data of the terminal device, identity information of the terminal device, and resource block set information determined to be used by the terminal device.

In some embodiments, in a case that the third information includes at least the priority information corresponding to the to-be-transmitted sidelink data, a priority class corresponding to the to-be-transmitted sidelink data is higher than or equal to a priority class corresponding to second priority information, and the priority class corresponding to the second priority information is determined based on the N pieces of COT sharing information. Specifically, for example, the second priority information is obtained by the terminal device respectively based on the N pieces of COT sharing information; or the second priority information is determined by the terminal device respectively based on priority information fields in SCI of devices that provide the N pieces of COT sharing information.

In some embodiments, each piece of COT sharing information in the M pieces of COT sharing information corresponds to one piece of second priority information.

In some embodiments, the second priority information corresponding to the M pieces of COT sharing information may alternatively be determined based on resource pool configuration information or sidelink BWP configuration information, or the second priority information corresponding to the M pieces of COT sharing information may alternatively be obtained from resource pool configuration information or sidelink BWP configuration information.

Specifically, for example, for the m^{th} piece of COT sharing information in the M pieces of COT sharing information, the second priority information is determined based on a priority class carried in the m^{th} piece of COT sharing information. If a priority class corresponding to to-be-transmitted sidelink data of the terminal device is higher than or equal to a priority class corresponding to the second priority information, the m^{th} COT sharing information is used as one of the N pieces of COT sharing information. Otherwise, the m^{th} piece of COT sharing information cannot be used as one of the N pieces of COT sharing information.

In some embodiments, the priority class corresponding to the second priority information includes a priority class threshold or a priority class value.

In some embodiments, the second priority information is corresponding to sidelink priority information, or the second priority information is corresponding to channel access priority information.

In some embodiments, in a case that the second priority information is corresponding to the sidelink priority information, the priority information corresponding to the to-be-transmitted sidelink data is sidelink priority information corresponding to the to-be-transmitted sidelink data.

In some embodiments, in a case that the second priority information is corresponding to the channel access priority information, the priority information corresponding to the to-be-transmitted sidelink data is channel access priority information corresponding to the to-be-transmitted sidelink data.

For example, a terminal device obtains four pieces of COT sharing information (that is, M = 4), which are respectively recorded as COT sharing information A, COT sharing information B, COT sharing information C, and COT sharing information D. In addition, a priority class carried in the COT sharing information A is used to determine second priority information a, a priority class carried in the COT sharing information B is used to determine second priority information b, a priority class carried in the COT sharing information C is used to determine second priority information c, and a priority class carried in the COT sharing information D is used to determine second priority information d. A priority class corresponding to to-be-transmitted sidelink data of the terminal device is higher than or equal to a priority class corresponding to the second priority information a, the priority class corresponding to the to-be-transmitted sidelink data of the terminal device is higher than or equal to a priority class corresponding to the second priority information b, the priority class corresponding to the to-be-transmitted sidelink data of the terminal device is lower than a priority class corresponding to the second priority information c, and the priority class corresponding to the to-be-transmitted sidelink data of the terminal device is lower than a priority class corresponding to the second priority information d. In this case, the COT sharing information A and the COT sharing information B are separately used as one of the N pieces of COT sharing information, and the COT sharing information C and the COT sharing information D cannot be used as COT sharing information in the N pieces of COT sharing information.

In some embodiments, SCI transmitted simultaneously with respective COT sharing information in the M pieces of COT sharing information includes target identity information; and in a case that the third information includes at least the identity information of the terminal device, identities corresponding to the target identity information included in the SCI transmitted simultaneously with respective COT sharing information in the N pieces of COT sharing information include an identity of the terminal device. It should be understood that terminal identity information included in the target identity information may be partial information of the terminal identity information, or group identity information included in the target identity information may be partial information of the group identity information, or service type information included in the target identity information may be partial information of the service type information, or Zone ID information included in the target identity information may be partial information of the Zone ID information.

In some embodiments, each piece of COT sharing information in the M pieces of COT sharing information includes target identity information; and in a case that the third information includes at least the identity information of the terminal device, an identity corresponding to the target identity information included in the N pieces of COT sharing information includes an identity of the terminal device. Specifically, for example, the target identity information includes identity information of a terminal allowed to use corresponding COT sharing information; or the target identity information includes identity information of a terminal group allowed to use corresponding COT sharing information.

Specifically, for example, for the m^{th} piece of COT sharing information in the M pieces of COT sharing information, it is determined, based on target identity information carried in the m^{th} piece of COT sharing information, whether the m^{th} piece of COT sharing information can be used as one of the N pieces of COT sharing information. For example, the target identity information carried in the m^{th} piece of COT sharing information includes terminal identity information. Only in a case that a terminal corresponding to the terminal identity information is the terminal device, the m^{th} piece of COT sharing information can be used as one of the N pieces of COT sharing information. For another example, the target identity information carried in the m^{th} piece of COT sharing information includes group identity information. Only when the terminal device belongs to a communication group corresponding to the group identity information, the m^{th} piece of COT sharing information can be used as one of the N pieces of COT sharing information. For another example, the target identity information carried in the m^{th} piece of COT sharing information includes service type information. Only in a case that the terminal device transmits a service of a service type corresponding to the service type information, the m^{th} piece of COT sharing information may be used as one of COT sharing information in the N pieces of COT sharing information. For another example, the target identity information carried in the m^{th} piece of COT sharing information includes Zone ID information. Only in a case that the terminal device is located in a zone corresponding to the Zone ID information, the m^{th} piece of COT sharing information may be used as one of the N pieces of COT sharing information. It should be understood that the terminal identity information included in the target identity information may be partial information of the terminal identity information, or the group identity information included in the target identity information may be partial information of the group identity information, or the service type information included in the target identity information may be partial information of the service type information, or the Zone ID information included in the target identity information may be partial information of the Zone ID information.

For example, a terminal identity of the terminal device is a, and the terminal device obtains four pieces of COT sharing information (that is, M = 4), which are respectively recorded as COT sharing information A, COT sharing information B, COT sharing information C, and COT sharing information D. In addition, target identity information carried in the COT sharing information A includes the terminal identity a, target identity information carried in the COT sharing information B includes the terminal identity a, target identity information carried in the COT sharing information C includes a terminal identity c, and target identity information carried in the COT sharing information D includes a terminal identity d. In this case, the COT sharing information A and the COT sharing information B are separately used as one of the N pieces of COT sharing information, and the COT sharing information C and the COT sharing information D cannot be used as COT sharing information in the N pieces of COT sharing information.

In some embodiments, resource block sets corresponding to transmission resources of PSCCHs or PSSCHs transmitted simultaneously with respective COT sharing information in the N pieces of COT sharing information include a resource block set determined to be used by the terminal device. Therefore, the N pieces of COT sharing information may be determined from the M pieces of COT sharing information.

In some embodiments, each piece of COT sharing information in the M pieces of COT sharing information includes target resource block set information; and in a case that the third information includes at least the resource block set information determined to be used by the terminal device, resource block sets corresponding to the target resource block set information included in the N pieces of COT sharing information include a resource block set determined to be used by the terminal device.

Specifically, for example, for the m^{th} piece of COT sharing information in the M pieces of COT sharing information, a resource block set 0 and a resource block set 1 are indicated based on target resource block set information carried in the m^{th} piece of COT sharing information. If the terminal device determines that sidelink transmission is to be performed in the resource block set 0 and/or the resource block set 1, the m^{th} piece of COT sharing information is used as one of the N pieces of COT sharing information; otherwise, the m^{th} piece of COT sharing information cannot be used as one of the N pieces of COT sharing information.

For example, the terminal device determines that sidelink transmission is to be performed in the resource block set 0 and the resource block set 1, and the terminal device obtains four pieces of COT sharing information (that is, M = 4), which are respectively denoted as COT sharing information A, COT sharing information B, COT sharing information C, and COT sharing information D. In addition, target resource block set information carried in the COT sharing information A indicates the resource block set 0 and the resource block set 1, target resource block set information carried in the COT sharing information B indicates the resource block set 0, the resource block set 1, and a resource block set 2, target resource block set information carried in the COT sharing information C indicates the resource block set 1 and the resource block set 2, and target resource block set information carried in the COT sharing information D indicates the resource block set 2 and a resource block set 3. In this case, the COT sharing information A and the COT sharing information B are separately used as one of the N pieces of COT sharing information, and the COT sharing information C and the COT sharing information D cannot be used as COT sharing information in the N pieces of COT sharing information.

Therefore, in embodiments of this application, when obtaining N pieces of COT sharing information, a terminal device may determine target COT sharing information from the N pieces of COT sharing information, and perform channel access based on a parameter corresponding to the target COT sharing information.

Further, the terminal device may determine the target COT sharing information from the N pieces of COT sharing information based on first information or second information, and the terminal device may determine the N pieces of COT sharing information from the M pieces of COT sharing information based on third information.

The foregoing describes method embodiments of this application in detail with reference to FIG. 11 to FIG. 14. The following describes apparatus embodiments of this application in detail with reference to FIG. 15. It should be understood that the apparatus embodiments are corresponding to the method embodiments. For similar descriptions, reference may be made to the method embodiments.

FIG. 15 is a schematic block diagram of a terminal device 300 according to an embodiment of this application. As shown in FIG. 15, the terminal device 300 includes:
a communications unit 310, configured to obtain N pieces of channel occupancy time COT sharing information, where N is a positive integer; and
a processing unit 320, configured to determine target COT sharing information from the N pieces of COT sharing information.

The processing unit 320 is further configured to perform channel access based on a parameter corresponding to the target COT sharing information.

In some embodiments, the N pieces of COT sharing information are provided by another terminal; or
one piece of COT sharing information in the N pieces of COT sharing information is provided by a network device, and other N-1 pieces of COT sharing information in the N pieces of COT sharing information are provided by another terminal.

In some embodiments, COT sharing information in the N pieces of COT sharing information carries at least one of following information:
resource block set information, COT duration information, a COT start slot position, priority information, channel access type information, and target identity information.

In some embodiments, the processing unit 320 is specifically configured to:
determine the target COT sharing information from the N pieces of COT sharing information based on first information.

The first information includes at least one of following:
priority information corresponding to to-be-transmitted sidelink data of the terminal device, identity information of the terminal device, and resource block set information determined to be used by the terminal device.

In some embodiments, in a case that the first information includes at least the priority information corresponding to the to-be-transmitted sidelink data, the processing unit 320 is specifically configured to:
determine that first COT sharing information in the N pieces of COT sharing information is the target COT sharing information.

A priority class corresponding to the to-be-transmitted sidelink data is higher than or equal to a priority class corresponding to first priority information, and the priority class corresponding to the first priority information is determined based on the first COT sharing information.

In some embodiments, the first priority information is obtained by the terminal device based on the first COT sharing information; or
the first priority information is determined by the terminal device based on a priority information field in sidelink control information SCI of a device that provides the first COT sharing information.

In some embodiments, the priority class corresponding to the first priority information includes a priority class threshold or a priority class value.

In some embodiments, the first priority information is corresponding to sidelink priority information, or the first priority information is corresponding to channel access priority information.

In some embodiments, in a case that the first priority information is corresponding to the sidelink priority information, the priority information corresponding to the to-be-transmitted sidelink data is sidelink priority information corresponding to the to-be-transmitted sidelink data; or

in a case that the first priority information is corresponding to the channel access priority information, the priority information corresponding to the to-be-transmitted sidelink data is channel access priority information corresponding to the to-be-transmitted sidelink data.

In some embodiments, the channel access priority information corresponding to the to-be-transmitted sidelink data is determined based on a first correspondence.

The first correspondence represents a correspondence between a channel access priority class and one of following information: a sidelink priority class, delay information corresponding to a sidelink service, reliability information corresponding to a sidelink service, and quality of service QoS information corresponding to a sidelink service.

In some embodiments, when the first information includes at least identity information of the terminal device, the processing unit 320 is specifically configured to:
determine that second COT sharing information in the N pieces of COT sharing information is the target COT sharing information.

The second COT sharing information includes target identity information, or the sidelink control information SCI transmitted together with the second COT sharing information includes target identity information, and an identity corresponding to the target identity information includes an identity of the terminal device.

In some embodiments, the target identity information includes identity information of a terminal allowed to use the second COT sharing information; or

the target identity information includes identity information of a terminal group allowed to use the second COT sharing information; or the target identity information includes zone identity information corresponding to a zone in which a terminal allowed to use the second COT sharing information is located.

In some embodiments, in a case that the first information includes at least the resource block set information determined to be used by the terminal device, the processing unit 320 is specifically configured to:
determine that third COT sharing information in the N pieces of COT sharing information is the target COT sharing information.

The third COT sharing information includes target resource block set information, and a resource block set determined to be used by the terminal device belongs to a resource block set corresponding to the target resource block set information; or a resource block set corresponding to a transmission resource of a physical sidelink control channel PSCCH or a physical sidelink shared channel PSSCH transmitted together with the third COT sharing information includes a resource block set determined to be used by the terminal device.

In some embodiments, the communications unit 310 is further configured to obtain first indication information from resource pool configuration information or sidelink bandwidth part BWP configuration information.

The first indication information is used to instruct the terminal device to determine the target COT sharing information from the N pieces of COT sharing information based on the first information.

In some embodiments, the processing unit 320 is specifically configured to:
determine the target COT sharing information from the N pieces of COT sharing information based on second information.

The second information includes at least one of following:
a remaining COT duration, priority information corresponding to COT sharing information, a maximum remaining COT duration, the highest priority class, the lowest priority class, and a device that provides COT sharing information.

In some embodiments, the priority information corresponding to the COT sharing information is sidelink priority information, or the priority information corresponding to the COT sharing information is channel access priority information.

In some embodiments, in a case that the second information includes at least the remaining COT duration, the processing unit 320 is specifically configured to:
determine that fourth COT sharing information in the N pieces of COT sharing information is the target COT sharing information.

The fourth COT sharing information is COT sharing information, in the N pieces of COT sharing information, corresponding to the longest remaining COT duration.

In some embodiments, a remaining COT duration corresponding to the fourth COT sharing information is greater than or equal to a first threshold, or a remaining COT duration corresponding to each piece of COT sharing information in the N pieces of COT sharing information is greater than or equal to a first threshold.

In some embodiments, in a case that COT information whose remaining COT duration is greater than or equal to a first threshold is not included in the N pieces of COT sharing information, the terminal device does not transmit COT sharing information when accessing a channel by using a parameter corresponding to the fourth COT sharing information.

In some embodiments, the first threshold is obtained based on pre-configuration information or network device configuration information.

In some embodiments, in a case that the second information includes at least the maximum remaining COT duration, the processing unit 320 is specifically configured to:
determine that COT sharing information, in the N pieces of COT sharing information, corresponding to the maximum remaining COT duration is the target COT sharing information.

In some embodiments, the remaining COT duration is determined based on a time domain resource in which to-be-transmitted sidelink data of the terminal device is located.

In some embodiments, in a case that the second information includes at least the priority information corresponding to COT sharing information, the processing unit 320 is specifically configured to:
determine that fifth COT sharing information in the N pieces of COT sharing information is the target COT sharing information.

The fifth COT sharing information is COT sharing information, in the N pieces of COT sharing information, corresponding to the lowest priority class, or the fifth COT sharing information is COT sharing information, in the N pieces of COT sharing information, corresponding to the highest priority class.

In some embodiments, in a case that the second information includes at least the highest priority class, the processing unit 320 is specifically configured to:
determine that COT sharing information, in the N pieces of COT sharing information, corresponding to the highest sidelink priority class is the target COT sharing information; or
determine that COT sharing information, in the N pieces of COT sharing information, corresponding to the highest channel priority class is the target COT sharing information.

In some embodiments, in a case that the second information includes at least the lowest priority class, the processing unit 320 is specifically configured to:
determine that COT sharing information, in the N pieces of COT sharing information, corresponding to the lowest sidelink priority class is the target COT sharing information; or
determine that COT sharing information, in the N pieces of COT sharing information, corresponding to the lowest channel priority class is the target COT sharing information.

In some embodiments, in a case that the second information includes at least the device that provides COT sharing information, the processing unit 320 is specifically configured to:
determine that COT sharing information, in the N pieces of COT sharing information, provided by a network device is the target COT sharing information.

In some embodiments, the communications unit 310 is further configured to obtain second indication information from resource pool configuration information or sidelink BWP configuration information.

The second indication information is used to instruct the terminal device to determine the target COT sharing information from the N pieces of COT sharing information based on the second information.

In some embodiments, the communications unit 310 is further configured to obtain M pieces of COT sharing information.

The processing unit 320 is further configured to determine the N pieces of COT sharing information from the M pieces of COT sharing information based on third information.

The third information includes at least one of following: priority information corresponding to to-be-transmitted sidelink data of the terminal device, identity information of the terminal device, and resource block set information determined to be used by the terminal device.

M is a positive integer, and N ≤ M.

In some embodiments, in a case that the third information includes at least the priority information corresponding to the to-be-transmitted sidelink data, a priority class corresponding to the to-be-transmitted sidelink data is higher than or equal to a priority class corresponding to second priority information, and the priority class corresponding to the second priority information is determined based on the N pieces of COT sharing information.

In some embodiments, the second priority information is obtained by the terminal device respectively based on the N pieces of COT sharing information; or
the second priority information is determined by the terminal device respectively based on priority information fields in SCI of devices that provide the N pieces of COT sharing information.

In some embodiments, the priority class corresponding to the second priority information includes a priority class threshold or a priority class value.

In some embodiments, the second priority information is corresponding to sidelink priority information, or the second priority information is corresponding to channel access priority information.

In some embodiments, in a case that the second priority information is corresponding to the sidelink priority information, the priority information corresponding to the to-be-transmitted sidelink data is sidelink priority information corresponding to the to-be-transmitted sidelink data; or
in a case that the second priority information is corresponding to the channel access priority information, the priority information corresponding to the to-be-transmitted sidelink data is channel access priority information corresponding to the to-be-transmitted sidelink data.

In some embodiments, each piece of COT sharing information in the M pieces of COT sharing information includes target identity information; and in a case that the third information includes at least the identity information of the terminal device, an identity corresponding to the target identity information included in the N pieces of COT sharing information includes an identity of the terminal device; or
SCI transmitted together with respective COT sharing information in the M pieces of COT sharing information includes target identity information; and in a case that the third information includes at least the identity information of the terminal device, identities corresponding to the target identity information included in the SCI transmitted together with respective COT sharing information in the N pieces of COT sharing information include an identity of the terminal device.

In some embodiments, the target identity information includes identity information of a terminal allowed to use corresponding COT sharing information; or
the target identity information includes identity information of a terminal group allowed to use corresponding COT sharing information; or the target identity information includes zone identity information corresponding to a zone in which a terminal allowed to use corresponding COT sharing information is located.

In some embodiments, each piece of COT sharing information in the M pieces of COT sharing information includes target resource block set information; and in a case that the third information includes at least the resource block set information determined to be used by the terminal device, resource block sets corresponding to the target resource block set information included in the N pieces of COT sharing information include a resource block set determined to be used by the terminal device; or
resource block sets corresponding to transmission resources of PSCCHs or PSSCHs transmitted together with respective COT sharing information in the N pieces of COT sharing information include a resource block set determined to be used by the terminal device.

In some embodiments, the processing unit 320 is further configured to determine, based on the target COT sharing information, a value of an information field included in COT information transmitted by the terminal device.

In some embodiments, the foregoing communications unit may be a communications interface or a transceiver, or an input/output interface of a communications chip or a system on chip. The processing unit may be one or more processors.

It should be understood that the terminal device 300 according to embodiments of this application may be corresponding to the terminal device in the method embodiments of this application, and the foregoing and other operations and/or functions of units in the terminal device 300 are respectively used to implement corresponding processes of the terminal device in the wireless communication method 200 shown in FIG. 11. For brevity, details are not described herein again.

FIG. 16 is a schematic structural diagram of a communications device 400 according to an embodiment of this application. The communications device 400 shown in FIG. 16 includes a processor 410, and the processor 410 may invoke a computer program from a memory and run the computer program to implement a method in embodiments of this application.

In some embodiments, as shown in FIG. 16, the communications device 400 may further include a memory 420. The processor 410 may invoke a computer program from the memory 420 and run the computer program to implement a method in embodiments of this application.

The memory 420 may be a separate component independent of the processor 410, or may be integrated into the processor 410.

In some embodiments, as shown in FIG. 16, the communications device 400 may further include a transceiver 430. The processor 410 may control the transceiver 430 to communicate with another device. Specifically, the processor 410 may transmit information or data to the another device, or receive information or data transmitted by the another device.

The transceiver 430 may include a transmitter and a receiver. The transceiver 430 may further include an antenna, and a quantity of antennas may be one or more.

In some embodiments, specifically, the communications device 400 may be the network device in embodiments of this application, and the communications device 400 may implement corresponding processes implemented by the network device in methods in the embodiments of this application. For brevity, details are not described herein again.

In some embodiments, specifically, the communications device 400 may be the terminal device in embodiments of this application, and the communications device 400 may implement corresponding processes implemented by the terminal device in methods in the embodiments of this application. For brevity, details are not described herein again.

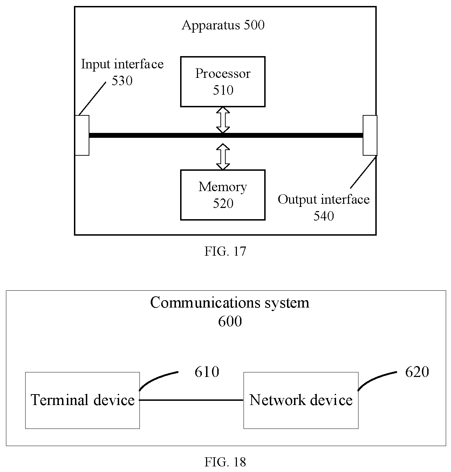

FIG. 17 is a schematic structural diagram of an apparatus according to an embodiment of this application. The apparatus 500 shown in FIG. 17 includes a processor 510, and the processor 510 may invoke a computer program from a memory and run the computer program to implement a method in embodiments of this application.

In some embodiments, as shown in FIG. 17, the apparatus 500 may further include a memory 520. The processor 510 may invoke a computer program from the memory 520 and run the computer program to implement a method in embodiments of this application.

The memory 520 may be a separate component independent of the processor 510, or may be integrated into the processor 510.

In some embodiments, the apparatus 500 may further include an input interface 530. The processor 510 may control the input interface 530 to communicate with another device or chip, and specifically, may obtain information or data transmitted by the another device or chip.

In some embodiments, the apparatus 500 may further include an output interface 540. The processor 510 may control the output interface 540 to communicate with another device or chip, and specifically, may output information or data to the another device or chip.

In some embodiments, the apparatus may be applied to the network device in embodiments of this application, and the apparatus may implement corresponding processes implemented by the network device in methods in the embodiments of this application. For brevity, details are not described herein again.

In some embodiments, the apparatus may be applied to the terminal device in embodiments of this application, and the apparatus may implement corresponding processes implemented by the terminal device in methods in the embodiments of this application. For brevity, details are not described herein again.

In some embodiments, the apparatus mentioned in embodiments of this application may alternatively be a chip, for example, may be a system-level chip, a system chip, a chip system, or a system-on-chip, or the like.

FIG. 18 is a schematic block diagram of a communications system 600 according to an embodiment of this application. As shown in FIG. 18, the communications system 600 includes a terminal device 610 and a network device 620.

The terminal device 610 may be configured to implement corresponding functions implemented by the terminal device in the foregoing method, and the network device 620 may be configured to implement corresponding functions implemented by the network device in the foregoing method. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor can implement or perform the methods, steps and logical block diagrams disclosed in the embodiments of this application. The general-purpose processor may be a microprocessor, or the processor may be any conventional processor or the like. The steps of methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the system and methods described in this specification includes but is not limited to these memories and any memory of another proper type.

It should be understood that, by way of example but not limitative description, for example, the memory in the embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct rambus random access memory (Direct Rambus RAM, DR RAM), or the like. In other words, the memory in the embodiment of this application includes but is not limited to these memories and any memory of another proper type.

An embodiment of this application further provides a computer-readable storage medium, configured to store a computer program.

In some embodiments, the computer-readable storage medium may be applied to the network device in the embodiments of this application, and the computer program causes a computer to execute corresponding processes implemented by the network device in methods in the embodiments of this application. For brevity, details are not described herein again.

In some embodiments, the computer-readable storage medium may be applied to the terminal device in the embodiments of this application, and the computer program causes a computer to execute corresponding processes implemented by the terminal device in methods in the embodiments of this application. For brevity, details are not described herein again.

An embodiment of this application further provides a computer program product including computer program instructions.

In some embodiments, the computer program product may be applied to the network device in the embodiments of this application, and the computer program instructions cause a computer to execute corresponding processes implemented by the network device in methods in the embodiments of this application. For brevity, details are not described herein again.

In some embodiments, the computer program product may be applied to the terminal device in the embodiments of this application, and the computer program instructions cause a computer to execute corresponding processes implemented by the terminal device in methods in the embodiments of this application. For brevity, details are not described herein again.

An embodiment of this application further provides a computer program.

In some embodiments, the computer program may be applied to the network device in embodiments of this application. When the computer program runs on a computer, the computer executes corresponding processes implemented by the network device in methods in the embodiments of this application. For brevity, details are not described herein again.

In some embodiments, the computer program may be applied to the terminal device in the embodiments of this application. When the computer program runs on a computer, the computer executes corresponding processes implemented by the terminal device in methods in the embodiments of this application. For brevity, details are not described herein again.

Persons of ordinary skill in the art may be aware that, units and algorithm steps in examples described in combination with embodiments disclosed in this specification can be implemented by electronic hardware or a combination of computer software and electronic hardware. Whether the functions are performed by hardware or software depends on particular applications and design constraints of the technical solutions.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatus or units may be implemented in electronic, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. For such understanding, the essence of the technical solutions of this application or the part contributing to the prior art, or some of the technical solutions may be represented in the form of software products. The computer software products are stored in a storage medium, and include a number of instructions to enable a computer device (which may be a personal computer, a server, a network device, or the like) to perform all or some of the steps of the methods described in various embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto.

## Claims

1. A wireless communication method for a terminal device, comprising:
Obtaining (S210), by the terminal device, N pieces of channel occupancy time ,COT, sharing information, wherein N is a positive integer;
Determining (S220), by the terminal device, target COT sharing information from the N pieces of COT sharing information; and
Performing (S230), by the terminal device, channel access based on a parameter corresponding to the target COT sharing information,
wherein the determining, by the terminal device, target COT sharing information from the N pieces of COT sharing information comprises:
determining, by the terminal device, the target COT sharing information from the N pieces of COT sharing information according to first information,
**characterized in that**:
the first information comprises resource block set information determined to be used by the terminal device, the determining, by the terminal device, the target COT sharing information from the N pieces of COT sharing information according to the first information comprises:
determining, by the terminal device, that third COT sharing information in the N pieces of COT sharing information is the target COT sharing information,
wherein a resource block set corresponding to a transmission resource of a physical sidelink control channel, PSCCH, or a physical sidelink shared channel, PSSCH, transmitted together with the third COT sharing information comprises a resource block set determined to be used by the terminal device.

2. The method according to claim 1, wherein
the N pieces of COT sharing information are provided by another terminal; or
one piece of COT sharing information in the N pieces of COT sharing information is provided by a network device, and other N-1 pieces of COT sharing information in the N pieces of COT sharing information are provided by another terminal.

3. The method according to claim 1 or 2, wherein
COT sharing information in the N pieces of COT sharing information carries at least one of following information:
resource block set information, COT duration information, a COT start slot position, priority information, channel access type information, and target identity information.

4. The method according to any one of claims 1 to 3,
wherein the first information comprises at least one of following:
priority information corresponding to to-be-transmitted sidelink data of the terminal device, identity information of the terminal device

5. The method according to claim 4, wherein
in a case that the first information comprises at least the identity information of the terminal device, the determining, by the terminal device, the target COT sharing information from the N pieces of COT sharing information based on first information comprises:
determining, by the terminal device, that second COT sharing information in the N pieces of COT sharing information is the target COT sharing information,
wherein the second COT sharing information comprises target identity information, or the sidelink control information ,SCI, transmitted together with the second COT sharing information comprises target identity information, and an identity corresponding to the target identity information comprises an identity of the terminal device.

6. The method according to claim 5, wherein
the target identity information comprises identity information of a terminal allowed to use the second COT sharing information; or
the target identity information comprises identity information of a terminal group allowed to use the second COT sharing information; or
the target identity information comprises zone identity information corresponding to a zone in which a terminal allowed to use the second COT sharing information is located.

7. The method according to any one of claims 1 to 3, wherein the determining, by the terminal device, target COT sharing information from the N pieces of COT sharing information comprises:
determining, by the terminal device, the target COT sharing information from the N pieces of COT sharing information based on second information,
wherein the second information comprises at least one of following:
a remaining COT duration, priority information corresponding to COT sharing information, a maximum remaining COT duration, the highest priority, the lowest priority , and a device that provides COT sharing information.

8. The method according to claim 7, wherein the priority information corresponding to the COT sharing information is sidelink priority information, or the priority information corresponding to the COT sharing information is channel access priority information.

9. A terminal device(300), comprising:
a communications unit (310), configured to acquire N pieces of channel occupation time COT sharing information, wherein N is a positive integer; and
a processing unit (320), configured to determine target COT sharing information from the N pieces of COT sharing information according to first information,
wherein the processing unit is further configured to perform channel access based on a parameter corresponding to the target COT sharing information,
**characterized in that**:
the first information comprises resource block set information determined to be used by the terminal device, the processing unit (320) is configured to determine that third COT sharing information in the N pieces of COT sharing information is the target COT sharing information,
wherein a resource block set corresponding to a transmission resource of a physical sidelink control channel, PSCCH, or a physical sidelink shared channel, PSSCH, transmitted together with the third COT sharing information comprises a resource block set determined to be used by the terminal device.

10. The terminal device according to claim 9, wherein
the N pieces of COT sharing information are provided by another terminal; or
one piece of COT sharing information in the N pieces of COT sharing information is provided by a network device, and other N-1 pieces of COT sharing information in the N pieces of COT sharing information are provided by another terminal.

11. The terminal device according to claim 9 or 10, wherein
COT sharing information in the N pieces of COT sharing information carries at least one of following information:
resource block set information, COT duration information, a COT start slot position, priority class information, channel access type information, and target identity information.

12. The terminal device according to any one of claims 9 to **11,**
wherein the first information comprises at least one of following:
priority class information corresponding to to-be-transmitted sidelink data of the terminal device, identity information of the terminal device.

13. The terminal device according to claim 12, wherein
in a case that the first information comprises at least the identity information of the terminal device, the processing unit is specifically configured to:
determine that second COT sharing information in the N pieces of COT sharing information is the target COT sharing information,
wherein the second COT sharing information comprises target identity information, or the sidelink control information ,SCI, transmitted simultaneously with the second COT sharing information comprises target identity information, and an identity corresponding to the target identity information comprises an identity of the terminal device.

14. A computer program product, comprising computer program instructions that cause a computer to execute the method according to any one of claims 1 to 8.

## Patentansprüche

1. Drahtloskommunikationsverfahren für eine Endgerätevorrichtung, das Folgendes umfasst:
Erhalten (S210), durch die Endgerätevorrichtung, von N Kanalbelegungszeit-Teilungsinformationen, COT-Teilungsinformationen, wobei N eine positive ganze Zahl ist;
Bestimmen (S220), durch die Endgerätevorrichtung, von Ziel-COT-Teilungsinformationen aus den N COT-Teilungsinformationen; und
Durchführen (S230), durch die Endgerätevorrichtung, eines Kanalzugriffs basierend auf einem den Ziel-COT-Teilungsinformationen entsprechenden Parameter,
wobei das Bestimmen, durch die Endgerätevorrichtung, von Ziel-COT-Teilungsinformationen aus den N COT-Teilungsinformationen Folgendes umfasst:
Bestimmen, durch die Endgerätevorrichtung, der Ziel-COT-Teilungsinformationen aus den N COT-Teilungsinformationen gemäß ersten Informationen,
**dadurch gekennzeichnet, dass**:
die ersten Informationen Ressourcenblocksatzinformationen umfassen, die so bestimmt werden, dass sie von der Endgerätevorrichtung verwendet werden, wobei das Bestimmen, durch die Endgerätevorrichtung, der Ziel-COT-Teilungsinformationen aus den N COT-Teilungsinformationen gemäß den ersten Informationen Folgendes umfasst:
Bestimmen, durch die Endgerätevorrichtung, dass dritte COT-Teilungsinformationen in den N COT-Teilungsinformationen die Ziel-COT-Teilungsinformationen sind,
wobei ein Ressourcenblocksatz, der einer Übertragungsressource eines Physical Sidelink Control Channel, PSCCH, oder eines Physical Sidelink Shared Channel, PSSCH, entspricht, der zusammen mit den dritten COT-Teilungsinformationen übertragen wird, einen Ressourcenblocksatz umfasst, der so bestimmt wird, dass er von der Endgerätevorrichtung verwendet wird.

2. Verfahren nach Anspruch 1, wobei
die N COT-Teilungsinformationen von einem anderen Endgerät bereitgestellt werden; oder
eine COT-Teilungsinformation in den N COT-Teilungsinformationen von einer Netzwerkvorrichtung bereitgestellt wird und andere N-1 COT-Teilungsinformationen in den N COT-Teilungsinformationen von einem anderen Endgerät bereitgestellt werden.

3. Verfahren nach Anspruch 1 oder 2, wobei
COT-Teilungsinformationen in den N COT-Teilungsinformationen mindestens eine der folgenden Informationen transportieren:
Ressourcenblocksatzinformationen, COT-Dauer-Informationen, eine COT-Anfangsschlitzposition, Prioritätsinformationen, Kanalzugriffstypinformationen und Zielkennungsinformationen.

4. Verfahren nach einem der Ansprüche 1 bis 3,
wobei die ersten Informationen mindestens eines von Folgendem umfassen:
Prioritätsinformationen, die zu übertragenden Sidelink-Daten der Endgerätevorrichtung entsprechen, Kennungsinformationen der Endgerätevorrichtung.

5. Verfahren nach Anspruch 4, wobei,
wenn die ersten Informationen mindestens die Kennungsinformationen der Endgerätevorrichtung umfassen, das Bestimmen, durch die Endgerätevorrichtung, der Ziel-COT-Teilungsinformationen aus den N COT-Teilungsinformationen basierend auf ersten Informationen Folgendes umfasst:
Bestimmen, durch die Endgerätevorrichtung, dass zweite COT-Teilungsinformationen in den N COT-Teilungsinformationen die Ziel-COT-Teilungsinformationen sind,
wobei die zweiten COT-Teilungsinformationen Zielkennungsinformationen umfassen oder die Sidelink-Steuerinformationen, SCI, die zusammen mit den zweiten COT-Teilungsinformationen übertragen werden, Zielkennungsinformationen umfassen und eine den Zielkennungsinformationen entsprechende Kennung eine Kennung der Endgerätevorrichtung umfasst.

6. Verfahren nach Anspruch 5, wobei
die Zielkennungsinformationen Kennungsinformationen eines Endgeräts umfassen, das die zweiten COT-Teilungsinformationen verwenden darf; oder
die Zielkennungsinformationen Kennungsinformationen einer Endgerätegruppe umfassen, die die zweiten COT-Teilungsinformationen verwenden darf; oder
die Zielkennungsinformationen Zonenkennungsinformationen umfassen, die einer Zone entsprechen, in der sich ein Endgerät befindet, das die zweiten COT-Teilungsinformationen verwenden darf.

7. Verfahren nach einem der Ansprüche 1 bis 3, wobei das Bestimmen, durch die Endgerätevorrichtung, von Ziel-COT-Teilungsinformationen aus den N COT-Teilungsinformationen Folgendes umfasst:
Bestimmen, durch die Endgerätevorrichtung, der Ziel-COT-Teilungsinformationen aus den N COT-Teilungsinformationen basierend auf zweiten Informationen,
wobei die zweiten Informationen mindestens eines von Folgendem umfassen:
eine verbleibende COT-Dauer, Prioritätsinformationen, die COT-Teilungsinformationen entsprechen, eine maximale verbleibende COT-Dauer, die höchste Priorität, die niedrigste Priorität und eine Vorrichtung, die COT-Teilungsinformationen bereitstellt.

8. Verfahren nach Anspruch 7, wobei die Prioritätsinformationen, die den COT-Teilungsinformationen entsprechen, Sidelink-Prioritätsinformationen sind oder die Prioritätsinformationen, die den COT-Teilungsinformationen entsprechen, Kanalzugriffsprioritätsinformationen sind.

9. Endgerätevorrichtung (300), die Folgendes umfasst:
eine Kommunikationseinheit (310), die dazu konfiguriert ist, N Kanalbelegungszeit-Teilungsinformationen, COT-Teilungsinformationen, zu erfassen, wobei N eine positive ganze Zahl ist; und
eine Verarbeitungseinheit (320), die dazu konfiguriert ist, Ziel-COT-Teilungsinformationen aus den N COT-Teilungsinformationen gemäß ersten Informationen zu bestimmen,
wobei die Verarbeitungseinheit ferner dazu konfiguriert ist, einen Kanalzugriff basierend auf einem den Ziel-COT-Teilungsinformationen entsprechenden Parameter durchzuführen,
**dadurch gekennzeichnet, dass**:
die ersten Informationen Ressourcenblocksatzinformationen umfassen, die so bestimmt werden, dass sie von der Endgerätevorrichtung verwendet werden, wobei die Verarbeitungseinheit (320) dazu konfiguriert ist, zu bestimmen, dass dritte COT-Teilungsinformationen in den N COT-Teilungsinformationen die Ziel-COT-Teilungsinformationen sind,
wobei ein Ressourcenblocksatz, der einer Übertragungsressource eines Physical Sidelink Control Channel, PSCCH, oder eines Physical Sidelink Shared Channel, PSSCH, entspricht, der zusammen mit den dritten COT-Teilungsinformationen übertragen wird, einen Ressourcenblocksatz umfasst, der so bestimmt wird, dass er von der Endgerätevorrichtung verwendet wird.

10. Verfahren nach Anspruch 9, wobei
die N COT-Teilungsinformationen von einem anderen Endgerät bereitgestellt werden; oder
eine COT-Teilungsinformation in den N COT-Teilungsinformationen von einer Netzwerkvorrichtung bereitgestellt wird und andere N-1 COT-Teilungsinformationen in den N COT-Teilungsinformationen von einem anderen Endgerät bereitgestellt werden.

11. Verfahren nach Anspruch 9 oder 10, wobei COT-Teilungsinformationen in den N COT-Teilungsinformationen mindestens eine der folgenden Informationen transportieren:
Ressourcenblocksatzinformationen, COT-Dauer-Informationen, eine COT-Anfangsschlitzposition, Prioritätsklasseninformationen,
Kanalzugriffstypinformationen und Zielkennungsinformationen.

12. Endgerätevorrichtung nach einem der Ansprüche 9 bis 11,
wobei die ersten Informationen mindestens eines von Folgendem umfassen:
Prioritätsklasseninformationen, die zu übertragenden Sidelink-Daten der Endgerätevorrichtung entsprechen, Kennungsinformationen der Endgerätevorrichtung.

13. Endgerätevorrichtung nach Anspruch 12,
wobei,
wenn die ersten Informationen mindestens die Kennungsinformationen der Endgerätevorrichtung umfassen, die Verarbeitungseinheit speziell zu Folgendem konfiguriert ist:
Bestimmen, dass zweite COT-Teilungsinformationen in den N COT-Teilungsinformationen die Ziel-COT-Teilungsinformationen sind,
wobei die zweiten COT-Teilungsinformationen Zielkennungsinformationen umfassen oder die Sidelink-Steuerinformationen, SCI, die gleichzeitig mit den zweiten COT-Teilungsinformationen übertragen werden, Zielkennungsinformationen umfassen und eine den Zielkennungsinformationen entsprechende Kennung eine Kennung der Endgerätevorrichtung umfasst.

14. Computerprogrammprodukt, das Computerprogrammanweisungen umfasst, die bewirken, dass ein Computer das Verfahren nach einem der Ansprüche 1 bis 8 ausführt.

## Revendications

1. Procédé de communication sans fil pour un dispositif terminal, comprenant :
l'obtention (S210), par le dispositif terminal, de N informations de partage de temps d'occupation de canal, COT, où N est un entier positif ;
la détermination (S220), par le dispositif terminal, d'informations de partage de COT cibles parmi les N informations de partage de COT ; et
la réalisation (S230), par le dispositif terminal, d'un accès au canal sur la base d'un paramètre correspondant aux informations de partage de COT cibles,
la détermination, par le dispositif terminal, d'informations de partage de COT cibles parmi les N informations de partage de COT comprenant :
la détermination, par le dispositif terminal, des informations de partage de COT cibles parmi les N informations de partage de COT en fonction de premières informations,
**caractérisé en ce que** :
les premières informations comprennent des informations d'ensemble de blocs de ressources déterminées pour être utilisées par le dispositif terminal, la détermination, par le dispositif terminal, des informations de partage de COT cibles parmi les N informations de partage de COT en fonction des premières informations comprenant :
la détermination, par le dispositif terminal, du fait que les troisièmes informations de partage COT dans les N informations de partage COT sont les informations de partage COT cibles,
un ensemble de blocs de ressources correspondant à une ressource de transmission d'un canal de commande de liaison latérale physique, PSCCH, ou d'un canal partagé de liaison latérale physique, PSSCH, transmis conjointement aux troisièmes informations de partage de COT comprenant un ensemble de blocs de ressources déterminé pour être utilisé par le dispositif terminal.

2. Procédé selon la revendication 1, dans lequel
les N informations de partage de COT sont fournies par un autre terminal ; ou
une information de partage de COT parmi les N informations de partage de COT est fournie par un dispositif de réseau, et les autres N-1 information de partage de COT parmi les N informations de partage de COT sont fournis par un autre terminal.

3. Procédé selon la revendication 1 ou la revendication 2, dans lequel
des informations de partage de COT parmi les N informations de partage de COT transportent au moins l'une des informations suivantes :
des informations d'ensemble de blocs de ressources, des informations de durée de COT, une position de créneau de début de COT, des informations de priorité, des informations de type d'accès au canal et des informations d'identité de la cible.

4. Procédé selon l'une quelconque des revendications 1 à 3,
dans lequel les premières informations comprennent au moins l'une parmi les suivantes :
des informations de priorité correspondant aux données de liaison latérale à transmettre du dispositif terminal, des informations d'identité du dispositif terminal.

5. Procédé selon la revendication 4, dans lequel
dans un cas dans lequel les premières informations comprennent au moins les informations d'identité du dispositif terminal, la détermination, par le dispositif terminal, des informations de partage de COT cibles parmi les N informations de partage de COT sur la base de premières informations comprend :
la détermination, par le dispositif terminal, du fait que des deuxièmes informations de partage COT parmi les N informations de partage COT sont les informations de partage COT cibles,
les deuxièmes informations de partage de COT comprenant des informations d'identité de la cible, ou les informations de commande de liaison latérale, SCI, transmises conjointement avec les deuxièmes informations de partage de COT comprenant des informations d'identité de la cible, et une identité correspondant aux informations d'identité de la cible comprenant une identité du dispositif terminal.

6. Procédé selon la revendication 5, dans lequel
les informations d'identité de la cible comprennent des informations d'identité d'un terminal autorisé à utiliser les deuxièmes informations de partage de COT ; ou
les informations d'identité de la cible comprennent des informations d'identité d'un groupe de terminaux autorisé à utiliser les deuxièmes informations de partage de COT ;
ou
les informations d'identité de la cible comprennent des informations d'identité de zone correspondant à une zone dans laquelle se trouve un terminal autorisé à utiliser les deuxièmes informations de partage de COT.

7. Procédé selon l'une quelconque des revendications 1 à 3, dans lequel la détermination, par le dispositif terminal, d'informations de partage de COT cibles parmi les N informations de partage de COT comprend :
la détermination, par le dispositif terminal, des informations de partage de COT cibles parmi les N informations de partage de COT à partir de deuxièmes informations,
les deuxièmes informations comprenant au moins l'une parmi les suivantes :
une durée de COT restante, des informations de priorité correspondant à des informations de partage de COT, une durée de COT restante maximale, la priorité la plus élevée, la priorité la plus basse, et un dispositif qui fournit des informations de partage de COT.

8. Procédé selon la revendication 7, dans lequel les informations de priorité correspondant aux informations de partage de COT sont des informations de priorité de liaison latérale, ou les informations de priorité correspondant aux informations de partage de COT sont des informations de priorité d'accès au canal.

9. Dispositif terminal (300), comprenant :
une unité de communication (310), configurée pour acquérir N informations de partage de temps d'occupation de canal, COT, où N est un entier positif ; et
une unité de traitement (320), configurée pour déterminer des informations de partage de COT cibles parmi les N informations de partage de COT en fonction de premières informations,
l'unité de traitement étant en outre configurée pour réaliser un accès au canal sur la base d'un paramètre correspondant aux informations de partage de COT cibles,
**caractérisé en ce que** :
les premières informations comprennent des informations d'ensemble de blocs de ressources déterminées pour être utilisées par le dispositif terminal, l'unité de traitement (320) étant configurée pour déterminer que les troisièmes informations de partage de COT dans les N informations de partage COT sont les informations de partage COT cibles,
un ensemble de blocs de ressources correspondant à une ressource de transmission d'un canal de commande de liaison latérale physique, PSCCH, ou d'un canal partagé de liaison latérale physique, PSSCH, transmis conjointement aux troisièmes informations de partage de COT comprenant un ensemble de blocs de ressources déterminé pour être utilisé par le dispositif terminal.

10. Dispositif terminal selon la revendication 9, dans lequel
les N informations de partage de COT sont fournies par un autre terminal ; ou
une information de partage de COT parmi les N informations de partage de COT est fournie par un dispositif de réseau, et les autres N-1 information de partage de COT parmi les N informations de partage de COT sont fournis par un autre terminal.

11. Dispositif terminal selon la revendication 9 ou 10, dans lequel
des informations de partage de COT parmi les N informations de partage de COT transportent au moins l'une des informations suivantes :
des informations d'ensemble de blocs de ressources, des informations de durée de COT, une position de créneau de début de COT, des informations de priorité, des informations de type d'accès au canal et des informations d'identité de la cible.

12. Dispositif terminal selon l'une quelconque des revendications 9 à 11,
dans lequel les premières informations comprennent au moins l'une parmi les suivantes :
informations de classe de priorité correspondant aux données de liaison latérale à transmettre du dispositif terminal, des informations d'identité du dispositif terminal.

13. Dispositif terminal selon la revendication 12,
dans lequel
dans un cas dans lequel les premières informations comprennent au moins les informations d'identité du dispositif terminal, l'unité de traitement est spécifiquement configurée pour :
déterminer que les deuxièmes informations de partage COT parmi les N informations de partage COT sont les informations de partage COT cibles,
les deuxièmes informations de partage de COT comprenant des informations d'identité de la cible, ou les informations de commande de liaison latérale, SCI, transmises conjointement avec les deuxièmes informations de partage de COT comprenant des informations d'identité de la cible, et une identité correspondant aux informations d'identité de la cible comprenant une identité du dispositif terminal.

14. Produit de programme informatique, comprenant des instructions de programme informatique qui amènent un ordinateur à exécuter le procédé selon l'une quelconque des revendications 1 à 8.
